Europäisches Patentamt

European Patent Office

Office européen des brevets

(19)

(11) **EP 1 589 763 A2**

(12) **EUROPEAN PATENT APPLICATION**

(43) Date of publication:
**26.10.2005 Bulletin 2005/43**

(51) Int Cl.[7]: **H04N 7/26**, G06T 5/00, H04N 5/14

(21) Application number: **05250938.7**

(22) Date of filing: **18.02.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **20.04.2004 JP 2004124271**<br><br>(71) Applicant: **SONY CORPORATION**<br>**Tokyo (JP)**<br><br>(72) Inventors:<br>• **Gomi, Shinichiro**<br> **Tokyo (JP)** | • **Nishi, Toru**<br> **Tokyo (JP)**<br>• **Yokoyama, Kazuki**<br> **Tokyo (JP)**<br>• **Asano, Mitsuyasu**<br> **Tokyo (JP)**<br>• **Ogata, Masami**<br> **Tokyo (JP)**<br>• **Ueda, Kazuhiko**<br> **Tokyo (JP)**<br><br>(74) Representative: **Leppard, Andrew John**<br>**D Young & Co**<br>**120 Holborn**<br>**London EC1N 2DY (GB)** |

(54) **Image processing apparatus, method and program**

(57)   A histogram section determines as a motion vector at a pixel of interest the candidate motion vector with highest frequency from among a candidate motion vector at the pixel of interest and candidate motion vectors at pixels neighboring the pixel of interest supplied by a template matching section, and supplies it to a motion-vector correcting section. The motion-vector correction section evaluates the confidence level of the motion vector supplied by the histogram section based on the luminance gradient around the pixel of interest detected by a luminance-gradient detecting section and a control signal indicating whether correction should be carried out supplied by the template matching section. If it is determined that the confidence level of the motion vector is low, the motion vector is corrected.

FIG. 1

**Description**

The present invention relates to image processing apparatuses, methods, and programs. Cathode Ray Tubes (CRTs) are typical known moving-image display apparatuses. These days, a growing number of liquid crystal display (LCD) apparatuses are used in addition to CRTs, as described in Japanese Unexamined Patent Application Publication No. 2002-219811.

When a CRT receives a command for displaying one of a plurality of frames constituting a moving image, it sequentially scans a plurality of horizontal lines (scanning lines) constituting the CRT screen with a built-in electron gun to form the specified frame (hereinafter, the frame serving as a target of the display command is referred to as the target display frame) on the screen.

In this case, each of the pixels constituting the target display frame is displayed like an impulse in the time direction. In other words, each pixel is activated only at the moment it is shot by the scanning electron gun. Hereinafter, display apparatuses employing the same display method as that employed by CRTs are collectively referred to as impulse display apparatuses.

In contrast, when an LCD apparatus is to display one of the frames constituting a moving image (target display frame) on the screen, it maintains the illumination of all liquid crystal regions constituting the screen from when the command for displaying the target frame is issued until when the command for displaying the subsequent frame is issued.

Assume that each pixel corresponds to one liquid crystal region. In this case, the frame display command causes the pixel value of each of the pixels constituting the target display frame to be transferred to the LCD apparatus. The LCD apparatus applies voltages of levels representing the specified pixel values to the respective liquid crystal regions (pixels) constituting the screen. As a result, each of the liquid crystal regions outputs light according to the applied voltage. In short, the level of the light output from a liquid crystal region corresponds to the level of the voltage applied to the liquid crystal region.

Thereafter, at least until a command for displaying the subsequent frame is issued, the specified voltage levels are continuously applied to the liquid crystal regions, which thus keeps on outputting the respective levels of light. In other words, the liquid crystal regions continue to display pixels with the specified pixel values.

When the pixel values of some pixels need to be changed as a result of a command for displaying the subsequent frame being issued, voltages of levels corresponding to the changed pixel values are applied to the liquid crystal regions corresponding to the relevant pixels (i.e., the voltage levels applied to the relevant liquid crystal regions are changed), and hence the output levels (levels of light) of the liquid crystal regions also change.

As described above, LCD apparatuses employ a display method different from that employed by impulse display apparatuses such as CRTs, and have several advantages over impulse display apparatuses, such as small installation space, low power consumption, and high resistance to distortion.

LCD apparatuses, however, have a first problem in that they experience more frequent occurrence of motion blurring than impulse display apparatuses when a moving image is displayed.

It has been believed that the occurrence of this first problem, i.e., the occurrence of motion blurring, in LCD apparatuses is caused by the low response speed of liquid crystal. More specifically, LCD apparatuses have been believed to undergo motion blurring because the output level of each of the liquid crystal regions takes a long time to reach the specified target level (e.g., the level corresponding to the specified pixel value, if each of the liquid crystal regions corresponds to one pixel).

In order to overcome this first problem, i.e., to prevent motion blurring from occurring in LCD apparatuses, Japanese Unexamined Patent Application Publication No. 2002-219811 describes the following method. According to the method described in Japanese Unexamined Patent Application Publication No. 2002-219811, a voltage of higher level than the target level is applied to each of the liquid crystal regions (pixels). Hereinafter, this method is referred to as the overdrive method. In other words, the overdrive method employs a level higher than the target level employed by the conventional method. In this sense, the overdrive method is a method for correcting the target level.

Unfortunately, this overdrive method cannot prevent the occurrence of motion blurring. Thus, this first problem remains unsolved because there are no effective methods available for preventing motion blurring in LCD apparatuses.

In view of these circumstances, the applicant of the present invention has investigated the reason why the known overdrive method cannot overcome the first problem, that is, the reason why motion blurring in LCD apparatuses cannot be prevented from occurring. Based on the result of this investigation, the applicant of the present invention has succeeded in inventing an image processing apparatus capable of solving the first problem. This invention was filed by the applicant of the present invention (Japanese Patent Application No. 2003-270965).

As described above, one of the causes of motion blurring in LCD apparatuses is the low response speed of liquid crystal (pixels), and the overdrive method takes this low response speed into consideration.

However, the occurrence of motion blurring in LCD apparatuses is caused by not only the low response speed of liquid crystal, but also the characteristics associated with human vision (observers of LCD apparatuses), called "follow-up seeing". The applicant of the present invention has found that the known overdrive method cannot prevent motion blurring from occurring because it takes no account of this follow-up seeing. The term "follow-up seeing" indicates a vital reaction characterized in that human beings unintentionally follow moving objects with their eyes. It is also called "afterimages on retina".

In other words, the applicant of the present invention has concluded that the known overdrive method, in which the pixel values of all pixels (the voltage levels for all liquid crystal regions) for displaying a moving object are corrected, that is, only the time response of the output levels of the liquid crystal regions is improved, cannot eliminate motion blurring due to the characteristics of follow-up seeing associated with human vision.

In view of this problem, the applicant of the present invention has invented an image processing apparatus, as described above, for carrying out image processing that takes into account not only the low response of liquid crystal but also the characteristics of follow-up seeing.

More specifically, an image processing apparatus invented by the applicant of the present invention prevents the occurrence of motion blurring due to the follow-up seeing by correcting the pixel value of a pixel to be processed from among the pixels constituting the target display frame (hereinafter, referred to as the pixel of interest) according to the motion vector (direction and magnitude) of the pixel of interest, if the pixel of interest exists at an edge of the moving object.

In this case, however, a second problem occurs such that if the motion vector of the pixel of interest does not match the motion vectors of pixels neighboring the pixel of interest (i.e., if a motion vector matching the surroundings is not used), the pixel value (correction value) of the pixel of interest on the resultant correction image (the target display frame) does not match the pixel values (correction values) of its neighboring pixels. In other words, the second problem can be restated as the pixel of interest on the resultant correction image mismatching its neighboring pixels, leading to low image quality.

Although the first and second problems have been described as involved with LCD apparatuses, they are generally involved with any display apparatus having the following characteristics, as well as LCD apparatuses. In more detail, display apparatuses exhibiting the first and second problems are characterized in that they have a plurality of display elements requiring a predetermined time from when the target level has been specified to when the output level reaches the target level and that each of the display elements is associated with at least some of the pixels constituting a frame or a field.

Many of the display apparatuses with such characteristics employ a display method in which the illumination of at least some of the display elements constituting the screen is maintained for a predetermined period of time after the display of a predetermined frame or field is specified (e.g., for a period of time until the display of the subsequent frame or field is specified). Hereinafter, display apparatuses employing this display method, such as LCD apparatuses, are collectively referred to as hold-type display apparatuses. Furthermore, the display with display elements (liquid crystal for LCD apparatuses) constituting the screen of hold-type display apparatuses is referred to as a hold-display. Thus, the first problem and the second problem can be regarded as problems associated with hold-type display apparatuses.

Embodiments of the present invention seek to easily detect a motion vector of a pixel matching those of neighboring pixels. Embodiments of the present invention relate to an image processing apparatus, method, and program capable of easily detecting a motion vector of a pixel matching those of neighboring pixels. A first image processing apparatus according to the present invention includes: a candidate generating device for setting as a pixel of interest a predetermined pixel from among pixels constituting a first access unit and comparing the first access unit with a second access unit preceding the first access unit to generate a candidate motion vector at the pixel of interest; a motion-vector determining device for determining as a motion vector at the pixel of interest a candidate motion vector with highest frequency from among the candidate motion vector at the pixel of interest and candidate motion vectors at pixels neighboring the pixel of interest generated by the candidate generating device; a luminance-change calculating device for calculating a degree of change in luminance around the pixel of interest; and a correction device for evaluating a confidence level of the motion vector determined by the motion-vector determining device based on results of processing by the luminance-change calculating device and the candidate generating device, and correcting the motion vector if it is determined that the confidence level is low.

If the degree of change in luminance calculated by the luminance-change calculating device is below a threshold, the correction device may determine that the confidence level of the motion vector is low and correct the motion vector.

The candidate generating device may detect a first pixel on the first access unit as a counterpart pixel for a second pixel on the second access unit, the second pixel being arranged at a location corresponding to the location of the pixel of interest, and generate a vector originating from the pixel of interest and terminating at the first pixel as the candidate motion vector at the pixel of interest.

If it is determined that the first access unit includes a plurality of candidates for the counterpart pixel or that the confidence level of the first pixel being the counterpart pixel is low, the candidate generating device may provide the correction device with first information indicating a command for correcting the motion vector. Furthermore, if the correction device receives the first information from the candidate generating device, the correction device may determine that the confidence level of the motion vector is low and correct the motion vector.

If the pixel of interest is included in the plurality of candidates for the counterpart pixel, the candidate generating device may provide the correction device with second information indicating that the pixel of interest is included in the plurality of candidates for the counterpart pixel, and if the correction device receives the second information from the candidate generating device, the correction device may determine that the confidence level of the motion vector is low and correct the motion vector to a 0 vector.

A first image processing method according to the present invention includes: a candidate generating step of setting as a pixel of interest a predetermined pixel from among pixels constituting a first access unit and comparing the first access unit with a second access unit preceding the first access unit to generate a candidate motion vector at the pixel of interest; a motion-vector determining step of determining as a motion vector at the pixel of interest a candidate motion vector with highest frequency from among the candidate motion vector at the pixel of interest and candidate motion vectors at pixels neighboring the pixel of interest generated in the candidate generating step; a luminance-change calculating step of calculating a degree of change in luminance around the pixel of interest; and a correction step of evaluating a confidence level of the motion vector determined in the motion-vector determining step based on results of processing in the luminance-change calculating step and the candidate generating step, and correcting the motion vector if it is determined that the confidence level is low.

A first computer-executable program according to the present invention sets as a pixel of interest a predetermined pixel from among pixels constituting a first access unit and applies image processing to the pixel of interest. The program includes: a candidate generating step of comparing the first access unit with a second access unit preceding the first access unit to generate a candidate motion vector at the pixel of interest; a motion-vector determining step of determining as a motion vector at the pixel of interest a candidate motion vector with highest frequency from among the candidate motion vector at the pixel of interest and candidate motion vectors at pixels neighboring the pixel of interest generated in the candidate generating step; a luminance-change calculating step of calculating a degree of change in luminance around the pixel of interest; and a correction step of evaluating a confidence level of the motion vector determined in the motion-vector determining step based on results of processing in the luminance-change calculating step and the candidate generating step, and correcting the motion vector if it is determined that the confidence level is low.

According to the first image processing apparatus, the first image processing method, and the first computer-executable program, a predetermined pixel from among pixels constituting a first access unit is set as a pixel of interest, and image processing is applied to the pixel of interest. More specifically, the first access unit is compared with a second access unit preceding the first access unit to generate a candidate motion vector at the pixel of interest. In addition to the candidate motion vector at the pixel of interest, candidate motion vectors at pixels neighboring the pixel of interest are generated. A candidate motion vector with highest frequency from among these candidate motion vectors is determined as a motion vector at the pixel of interest. A confidence level of the determined motion vector is evaluated based on a degree of change in luminance around the pixel of interest and the result of processing for generating the motion vectors. The motion vector is corrected if it is determined that the confidence level is low.

A second image processing apparatus according to the present invention includes: a candidate generating device for setting as a pixel of interest a predetermined pixel from among pixels constituting a first access unit and comparing the first access unit with a second access unit preceding the first access unit to generate a candidate motion vector at the pixel of interest; a motion-vector determining device for determining as a motion vector at the pixel of interest a candidate motion vector with highest frequency from among the candidate motion vector at the pixel of interest and candidate motion vectors at pixels neighboring the pixel of interest generated by the candidate generating device; a correction device for correcting the motion vector determined by the motion-vector determining device; and a processing executing device for carrying out predetermined processing using the motion vector corrected by the correction device. The correction device corrects the motion vector by a first method based on a characteristic of the predetermined processing by the processing executing device.

The image processing apparatus may further include a luminance-change calculating device for calculating a degree of change in luminance around the pixel of interest. The correction device may evaluate a confidence level of the motion vector determined by the motion-vector determining device based on results of processing by the luminance-change calculating device and the candidate generating device and, if it is determined that the confidence level of the motion vector is low, the correction device may further correct the motion vector corrected by the first method by a second method.

A second image processing method according to the present invention is executed by an information processing apparatus. The method includes: a candidate generating step of setting as a pixel of interest a predetermined pixel from among pixels constituting a first access unit and comparing the first access unit with a second access unit preceding the first access unit to generate a candidate motion vector at the pixel of interest; a motion-vector determining step of determining as a motion vector at the pixel of interest a candidate motion vector with highest frequency from among the candidate motion vector at the pixel of interest and candidate motion vectors at pixels neighboring the pixel of interest generated in the candidate generating step; a correction step of correcting the motion vector determined in the motion-vector determining step; and a processing control step of controlling the information processing apparatus to carry out predetermined processing using the motion vector corrected in the correction step. In the correction step, the motion vector is corrected by a first correction method based on a characteristic of the predetermined processing by the image processing apparatus in the processing control step.

A second computer-executable program according to the present invention controls a processing executing apparatus for applying predetermined processing to a predetermined one of a plurality of access units constituting a moving image, wherein the predetermined processing uses a motion vector at each of pixels on the predetermined access unit. The program includes: a candidate generating step of setting as a pixel of interest a predetermined pixel from among pixels constituting a first access unit and comparing the first access unit with a second access unit preceding the first access unit to generate a candidate motion vector at the pixel of interest; a motion-vector determining step of determining as a motion vector at the pixel of interest a candidate motion vector with highest frequency from among the candidate motion vector at the pixel of interest and candidate motion vectors at pixels neighboring the pixel of interest generated in the candidate generating step; a correction step of correcting the motion vector determined in the motion-vector determining step; and a processing control step of controlling the processing executing apparatus to carry out the predetermined processing using the motion vector corrected in the correction step. In the correction step, the motion vector is corrected by a first correction method based on a characteristic of the predetermined processing by the processing executing apparatus in the processing control step.

According to the second image processing apparatus, the second image processing method, and the second computer-executable program, a predetermined pixel from among pixels constituting a first access unit is set as a pixel of interest and the first access unit is compared with a second access unit preceding the first access unit to generate a candidate motion vector at the pixel of interest. A candidate motion vector with highest frequency from among the candidate motion vector at the pixel of interest and candidate motion vectors at pixels neighboring the pixel of interest is determined as a motion vector at the pixel of interest. The determined motion vector is corrected, and predetermined processing is carried out using the corrected motion vector. At the time, the motion vector is corrected by a first method based on a characteristic of the predetermined processing.

As described above, according to embodiments of the present invention, the motion vector of a pixel of interest can be detected for image processing for preventing motion blurring (particularly, motion blurring due to follow-up seeing of human vision) from occurring in hold-type display apparatuses such as LCD apparatuses. In particular, a motion vector of a pixel matching those of neighboring pixels can be easily detected.

Further particular and preferred aspects of the present invention are set out in the accompanying independent and dependent claims. Features of the dependent claims may be combined with features of the independent claims as appropriate, and in combinations other than those explicitly set out in the claims. The present invention will be described further, by way of example only, with reference to preferred embodiments thereof as illustrated in the accompanying drawings, in which:

Fig. 1 is a block diagram depicting an example structure of an image processing apparatus according to one embodiment;

Fig. 2 is a block diagram depicting a detailed example structure of the motion detecting section of the image processing apparatus shown in Fig. 1;

Fig. 3 is a diagram illustrating an example of pixels to be processed by the luminance-gradient detecting section in Fig. 2;

Fig. 4 is a block diagram showing a detailed example structure of the template matching section of the motion detecting section in Fig. 2;

Fig. 5 is a diagram illustrating an example of pixels to be processed by the template matching section in Fig. 4;

Fig. 6 is a diagram showing an example of the pixel value of each of pixels neighboring the pixel of interest on the target display frame and the pixel value of each of the corresponding pixels on the previous frame;

Fig. 7 is a diagram depicting an example of a result of calculation by the SAD calculating section in Fig. 4;

Fig. 8 is a diagram illustrating values used by the template matching section in Fig. 4 for processing;

Fig. 9 is a diagram showing another example (different from the example in Fig. 6) of the pixel value of each of pixels neighboring the pixel of interest on the target display frame and the pixel value of each of the corresponding pixels on the previous frame;

Fig. 10 is a diagram depicting another example (different from the example in Fig. 7) of a result of calculation by the SAD calculating section in Fig. 4;

Fig. 11 is a diagram showing pixels to be processed by the histogram section in Fig. 2;

Fig. 12 is a diagram depicting an example of a histogram;

Fig. 13 is a block diagram showing a detailed example structure of the motion-vector correcting section of the motion detecting section in Fig. 2;

Fig. 14 is a diagram depicting an example of downstream processing to be taken into consideration by the downstream-processing correcting section of the motion detecting section in Fig. 13 for correction processing;

Fig. 15 is a diagram depicting an example of a correction method of the downstream-processing correcting section of the motion detecting section in Fig. 13 for performing correction suitable for the characteristics of the downstream processing in Fig. 14;

Fig. 16 is a diagram depicting another example of a correction method of the downstream-processing correcting section of the motion detecting section in Fig. 13;

Fig. 17 is a diagram depicting a result of SAD for illustrating another embodiment of the template matching section in Fig. 4;

Fig. 18 is a block diagram showing another example of a detailed structure of the motion-vector correcting section of the motion detecting section in Fig. 2;

Fig. 19 is a block diagram showing still another example of a detailed structure of the motion-vector correcting section of the motion detecting section in Fig. 2;

Fig. 20 is a flowchart illustrating image processing by the image processing apparatus in Fig. 1;

Fig. 21 is a flowchart illustrating the motion-vector calculation processing in Fig. 20;

Fig. 22 is a block diagram depicting an example structure (different from the example in Fig. 1) of the image processing apparatus according to another embodiment; and

Fig. 23 is a block diagram depicting an example structure (different from those in Figs. 1 and 22) of the image processing apparatus according to still another embodiment.

Before embodiments according to the present invention are described, the relationships between elements of subjects described in claims and components described below in the form of embodiments will be provided. Some examples described in the form of embodiments may implicitly correspond to elements described in claims. In other words, some examples described below may not have explicit corresponding elements described in claims. In contrast, some examples described below as explicitly corresponding to elements in claims may correspond to elements other than those explicitly corresponding elements.

Not all examples described below may be reflected in claims as the invention. In other words, some examples described below may suggest inventions not included in claims, e.g., inventions filed in the form of division application or inventions added through amendment.

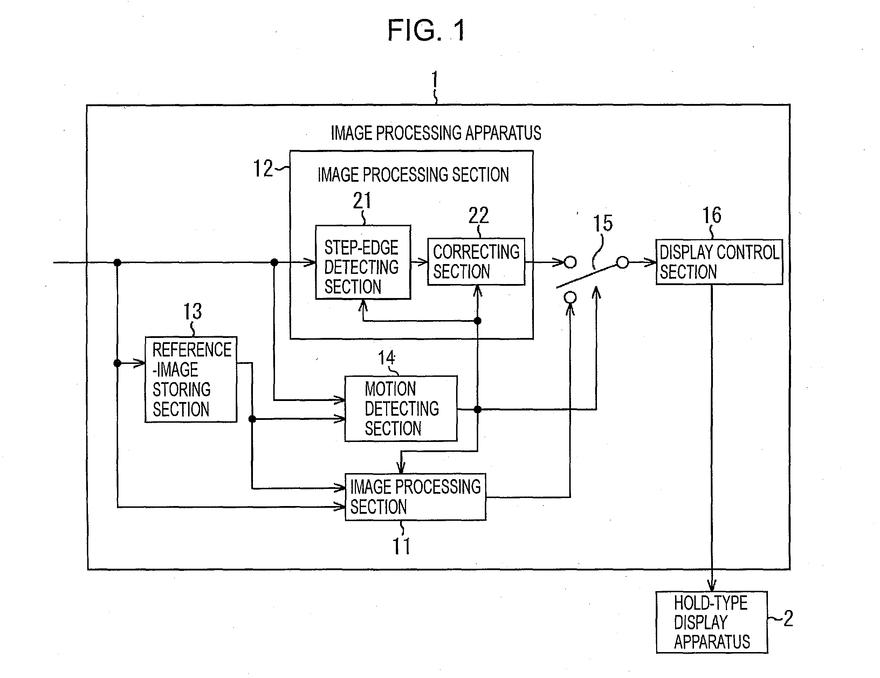

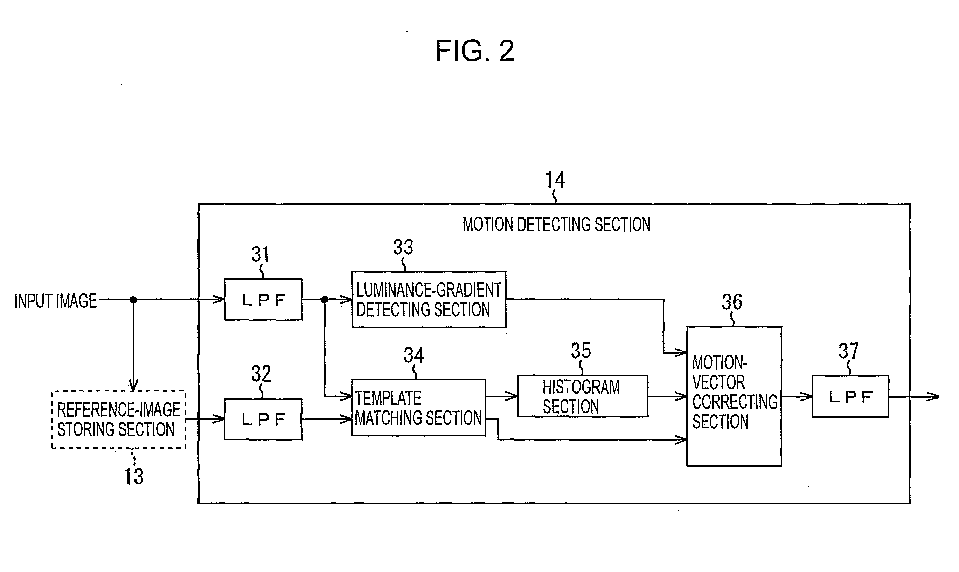

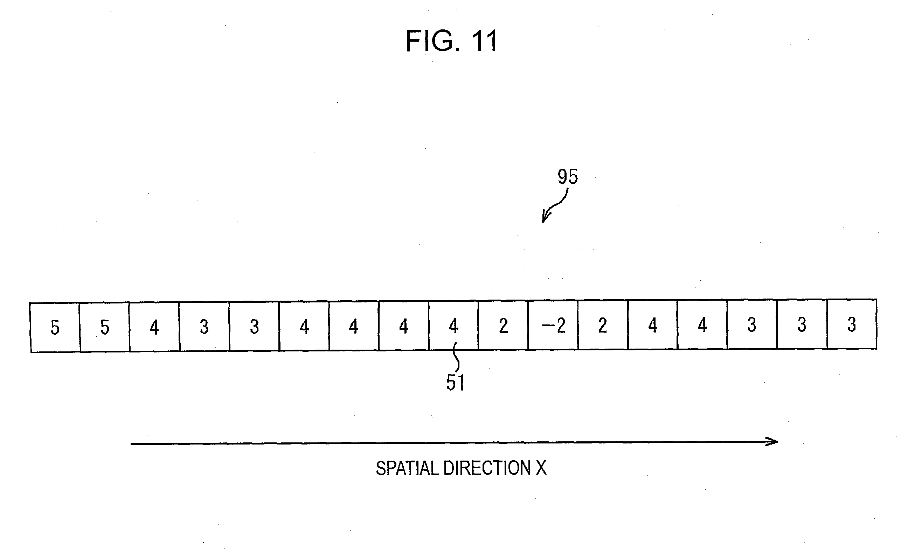

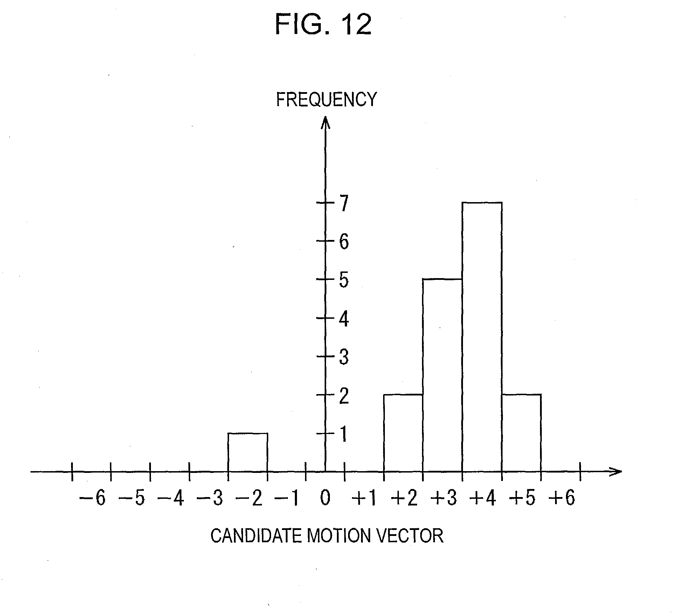

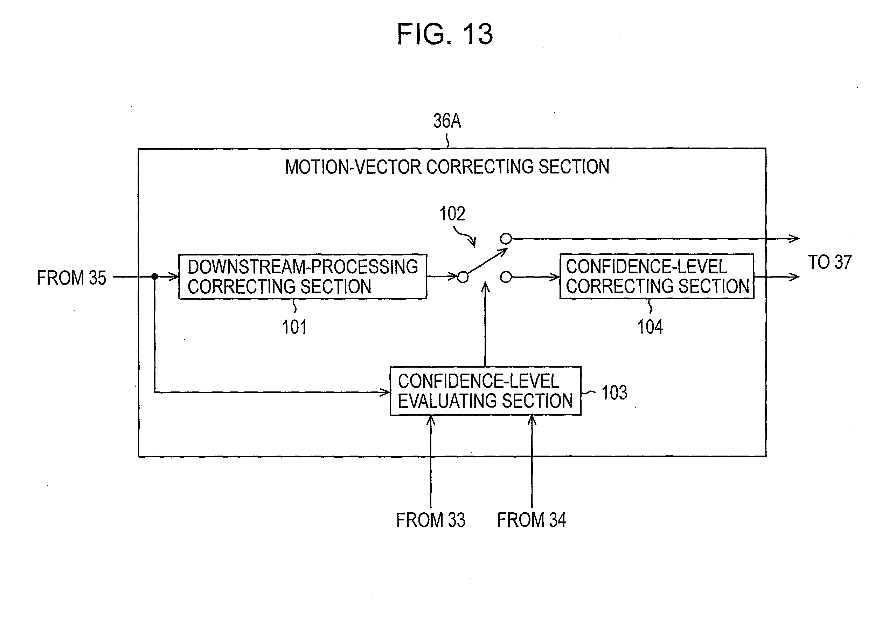

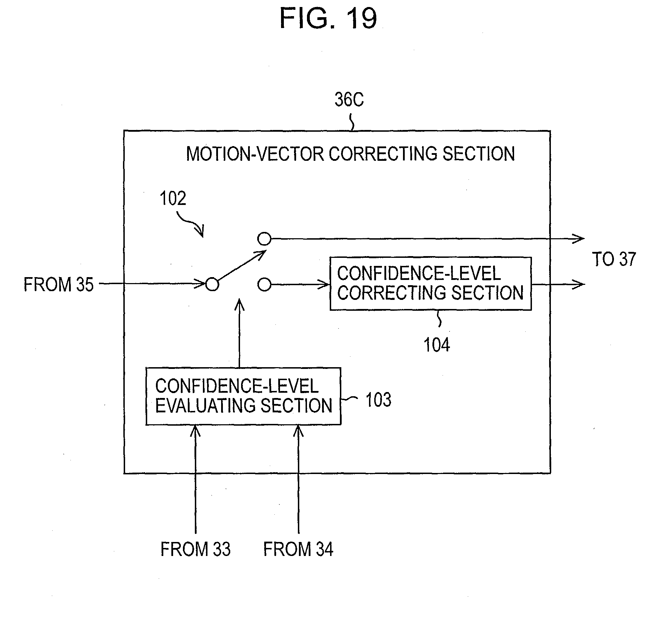

According to embodiments of the present invention, a first image processing apparatus is provided. The first image processing apparatus (e.g., a motion detecting section 14 of an image processing apparatus 1 in Fig. 1, a derailed example structure of the motion detecting section 14 being shown in Fig. 2) includes: candidate generating means (e.g., a template matching section 34 in Fig. 2) for setting as a pixel of interest a predetermined pixel from among pixels constituting a first access unit and comparing the first access unit with a second access unit preceding the first access unit to generate a candidate motion vector at the pixel of interest; motion-vector determining means (e.g., a histogram section 35 in Fig. 2) for determining as a motion vector at the pixel of interest a candidate motion vector with highest frequency (e.g., "+4" with highest frequency in the histogram shown in Fig. 12) from among the candidate motion vector at the pixel of interest and candidate motion vectors at pixels neighboring the pixel of interest (e.g., values of pixels in an area 95 in Fig. 11) generated by the candidate generating means; luminance-change calculating means (e.g., a luminance-gradient detecting section 33 in Fig. 2) for calculating a degree of change in luminance (e.g., luminance gradient described later, more specifically, "slope" in Equation (2) described later) around the pixel of interest; and correction means (e.g., a motion-vector correcting section 36 in Fig. 2: a motion-vector correcting section 36A in Fig. 13 or a motion-vector correcting section 36C in Fig. 19) for evaluating a confidence level of the motion vector determined by the motion-vector determining means based on results of processing by the luminance-change calculating means and the candidate generating means, and correcting the motion vector if it is determined that the confidence level is low (e.g., if at least one of a third condition requiring that Inequality (9) shown below be established and a fourth condition requiring that a control signal "flag" supplied by the template matching section 34 in Fig. 2 be "1" is satisfied).

If the degree of change in luminance calculated by the luminance-change calculating means is below a threshold (e.g., the third condition requiring that Inequality (9) shown below be established is satisfied), the correction means may determine that the confidence level of the motion vector is low and correct the motion vector.

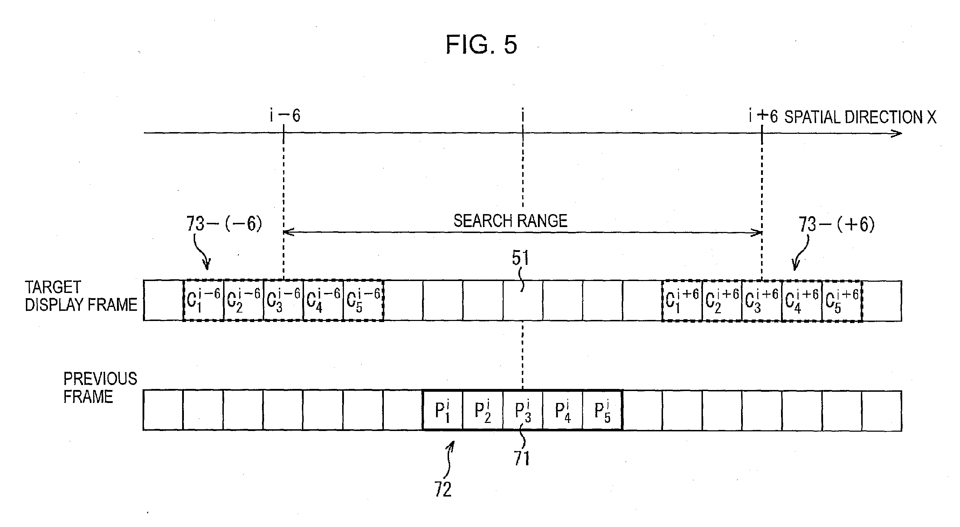

The candidate generating means may detect a first pixel (e.g., any pixel in the search range i-6 to i+6 in Fig. 5) on the first access unit as a counterpart pixel for a second pixel (e.g., a pixel 71 in Fig. 5) on the second access unit, the second pixel being arranged at a location (e.g., location i in Fig. 5) corresponding to the location of the pixel of interest (e.g., a pixel of interest 51 in Fig. 5), and generate a vector (e.g., "+6" if the center pixel in a comparison area 73-(+6) in Fig. 5, i.e., the pixel at the location i+6 is detected as the first pixel) originating from the pixel of interest and terminating at the first pixel as the candidate motion vector at the pixel of interest.

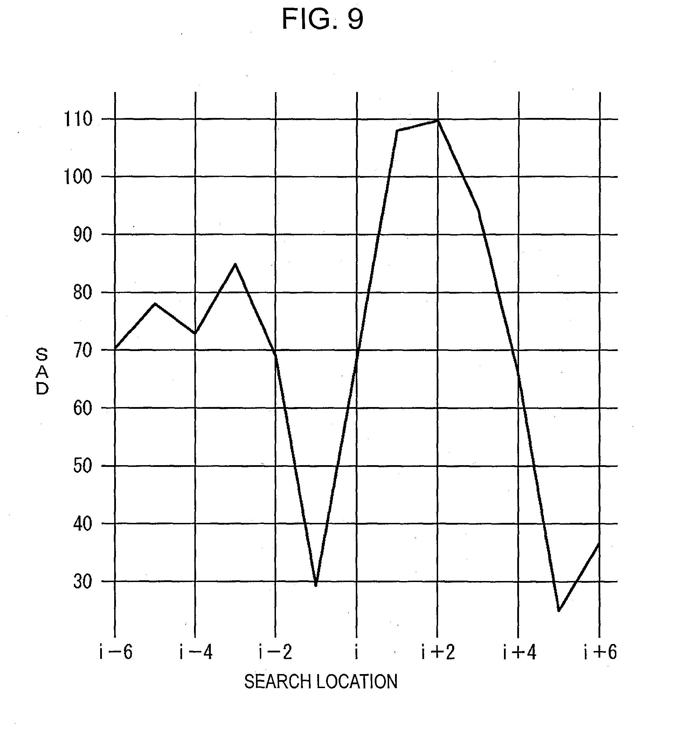

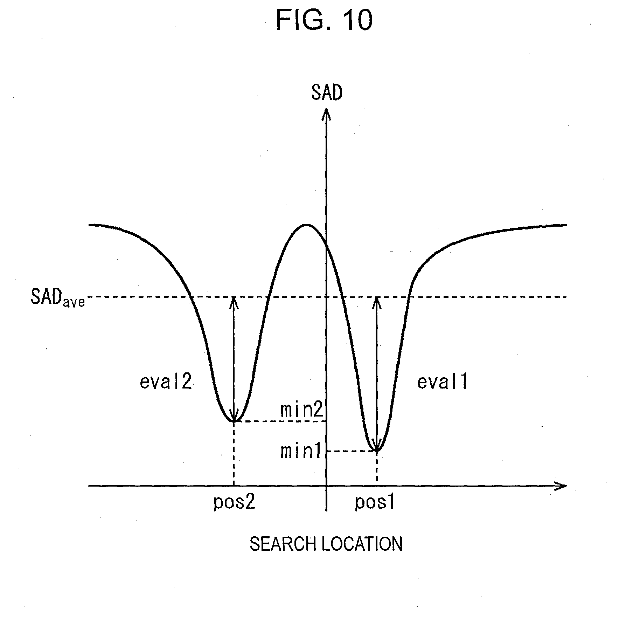

If it is determined that the first access unit includes a plurality of candidates for the counterpart pixel (e.g., if the pixels at the search location i+5 and the search location i-1 are candidate counterpart pixels as shown in Fig. 9, more specifically, if a first condition requiring that all of Inequality (5) to Inequality (7) shown below be established is satisfied; refer to Fig. 10 for parameters of Inequality (5) to Inequality (7)) or that the confidence level of the first pixel being the counterpart pixel is low (e.g., if a second condition requiring that Inequality (8) shown below be established is satisfied; refer to Fig. 10 for min1 of Inequality (8)), the candidate generating means may provide the correction means with first information (control signal "flag" equal to "1" as described later) indicating a command for correcting the motion vector. Furthermore, if the correction means receives the first information from the candidate generating means (if a fourth condition requiring that a control signal "flag" supplied by the template matching section 34 in Fig. 2 be "1" is satisfied), the correction means may determine that the confidence level of the motion vector is low and correct the motion vector.

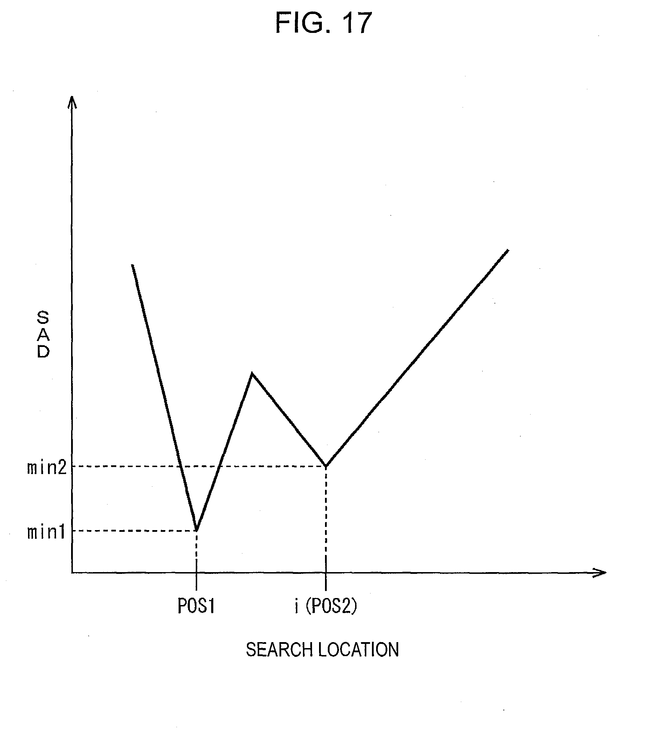

If the pixel of interest is included in the plurality of candidates for the counterpart pixel (e.g., if the search location pos2 corresponding to the second smallest SAD, i.e., the minimal value min2, is the location i of the pixel of interest as shown in Fig. 17), the candidate generating means may provide the correction means with second information indicating that the pixel of interest is included in the plurality of candidates for the counterpart pixel, and if the correction means receives the second information from the candidate generating means (if a fifth condition described later is satisfied), the correction means may determine that the confidence level of the motion vector is low and correct the motion vector to a 0 vector.

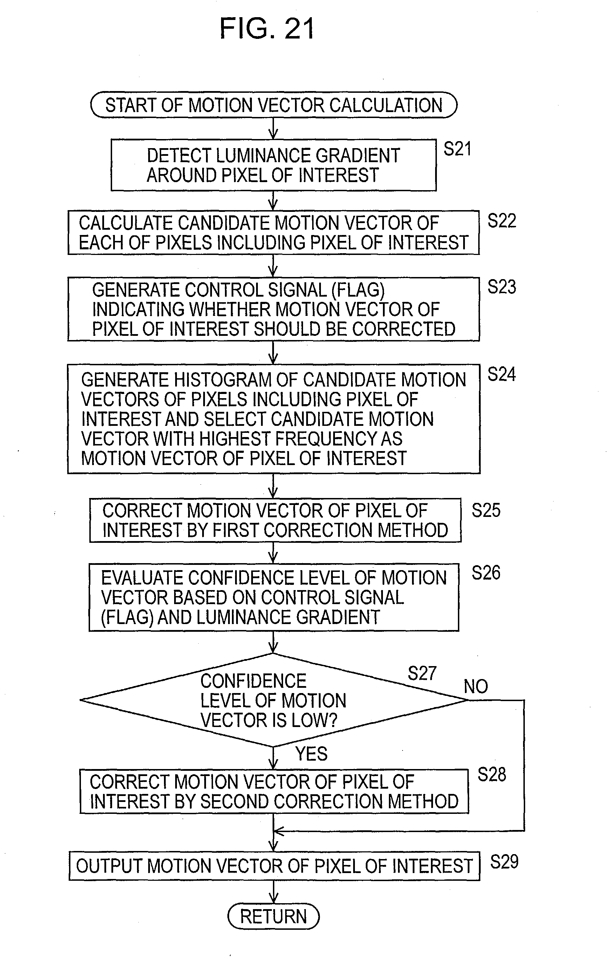

According to embodiments of the present invention, a first image processing method is provided. The first image processing method (e.g., image processing method by the motion detecting section 14 in Fig. 2) includes: a candidate generating step (e.g., processing in step S22 in Fig. 21) of setting as a pixel of interest a predetermined pixel from among pixels constituting a first access unit and comparing the first access unit with a second access unit preceding the first access unit to generate a candidate motion vector at the pixel of interest; a motion-vector determining step (e.g., processing in step S24 in Fig. 21) of determining as a motion vector at the pixel of interest a candidate motion vector with highest frequency from among the candidate motion vector at the pixel of interest and candidate motion vectors at pixels neighboring the pixel of interest generated in the candidate generating step; a luminance-change calculating step (e.g., processing in step S21 in Fig. 21) of calculating a degree of change in luminance around the pixel of interest; and a correction step (e.g., processing in steps 26 to 28 in Fig. 21) of evaluating a confidence level of the motion vector determined in the motion-vector determining step based on results of processing in the luminance-change calculating step and the candidate generating step (e.g., results of processing in steps 21 and 23 in Fig. 21), and correcting the motion vector if it is determined that the confidence level is low.

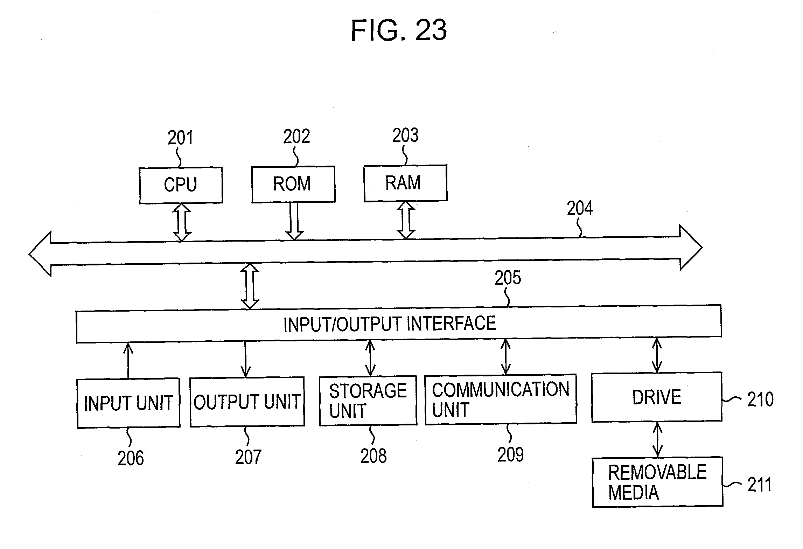

According to embodiments of the present invention, a first computer-executable program is provided. The first program sets as a pixel of interest a predetermined pixel from among pixels constituting a first access unit and causes a computer (e.g., a CPU 201 in Fig. 23) to apply image processing to the pixel of interest. The program includes: a candidate generating step (e.g., processing in step S22 in Fig. 21) of comparing the first access unit with a second access unit preceding the first access unit to generate a candidate motion vector at the pixel of interest; a motion-vector determining step (e.g., processing in step S24 in Fig. 21) of determining as a motion vector at the pixel of interest a candidate motion vector with highest frequency from among the candidate motion vector at the pixel of interest and candidate motion vectors at pixels neighboring the pixel of interest generated in the candidate generating step; a luminance-change calculating step (e.g., processing in step S21 in Fig. 21) of calculating a degree of change in luminance around the pixel of interest; and a correction step (e.g., processing in steps 26 to 28 in Fig. 21) of evaluating a confidence level of the motion vector determined in the motion-vector determining step based on results of processing in the luminance-change calculating step and the candidate generating step (e.g., results of processing in steps 21 and 23 in Fig. 21), and correcting the motion vector if it is determined that the confidence level is low.

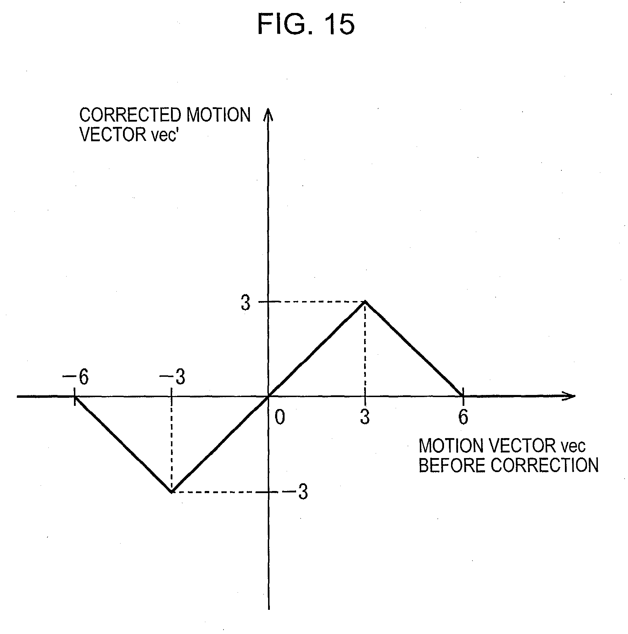

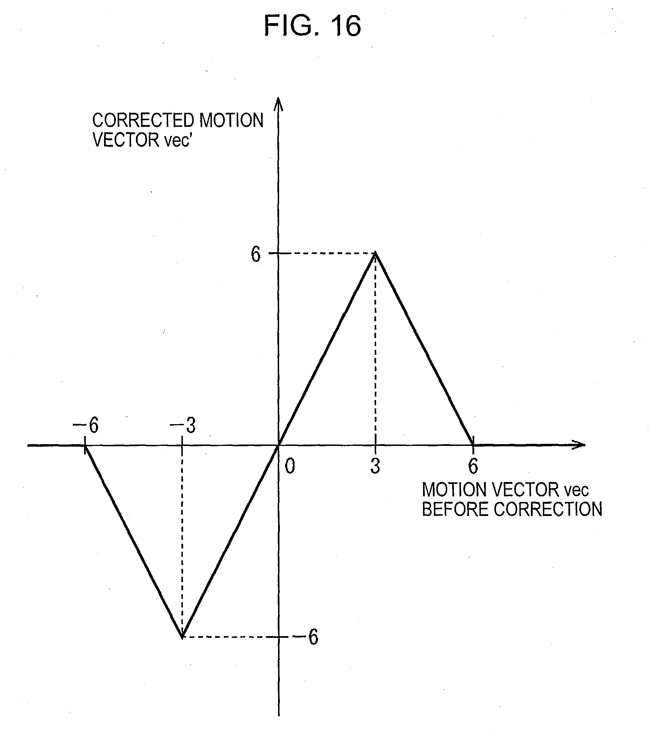

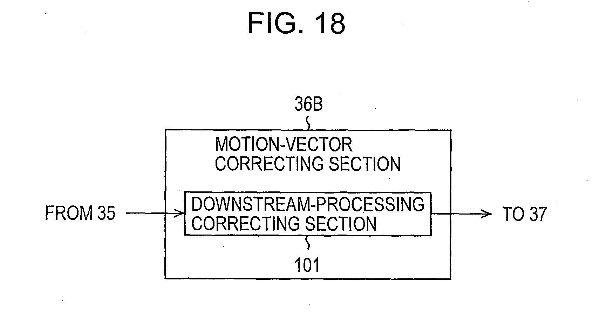

According to embodiments of the present invention, a second image processing apparatus is provided. The second image processing apparatus (e.g., the motion detecting section 14 and an image processing section 12 of an image processing apparatus 1 in Fig. 1, a derailed example structure of the motion detecting section 14 being shown in Fig. 2) includes: candidate generating means (e.g., the template matching section 34 in Fig. 2) for setting as a pixel of interest a predetermined pixel from among pixels constituting a first access unit and comparing the first access unit with a second access unit preceding the first access unit to generate a candidate motion vector at the pixel of interest; motion-vector determining means (e.g., the histogram section 35 in Fig. 2) for determining as a motion vector at the pixel of interest a candidate motion vector with highest frequency from among the candidate motion vector at the pixel of interest and candidate motion vectors at pixels neighboring the pixel of interest generated by the candidate generating means; correction means (e.g., the motion-vector correcting section 36 in Fig. 2: the motion-vector correcting section 36A in Fig. 13 or a motion-vector correcting section 36B in Fig. 18) for correcting the motion vector determined by the motion-vector determining means; and processing executing means (e.g., a correcting section 22 of the image processing section 12 in Fig. 1) for carrying out predetermined processing using the motion vector corrected by the correction means. The correction means corrects the motion vector (e.g., with a downstream-processing correcting section 101 in Fig. 13 or 18) by a first method (e.g., a method shown in Fig. 15 or 16) based on a characteristic of the predetermined processing by the processing executing means.

The image processing apparatus may further include luminance-change calculating means (e.g., the luminance-gradient detecting section 33 in Fig. 2) for calculating a degree of change in luminance around the pixel of interest. The correction means may evaluate a confidence level of the motion vector determined by the motion-vector determining means (e.g., with a confidence-level evaluating section 103 in Fig. 13) based on results of processing by the luminance-change calculating means and the candidate generating means and, if it is determined that the confidence level of the motion vector is low, the correction means may further correct (e.g., with a confidence-level correcting section 104 in Fig. 13) the motion vector corrected by the first method by a second method (e.g., method defined in Equation (10) shown below).

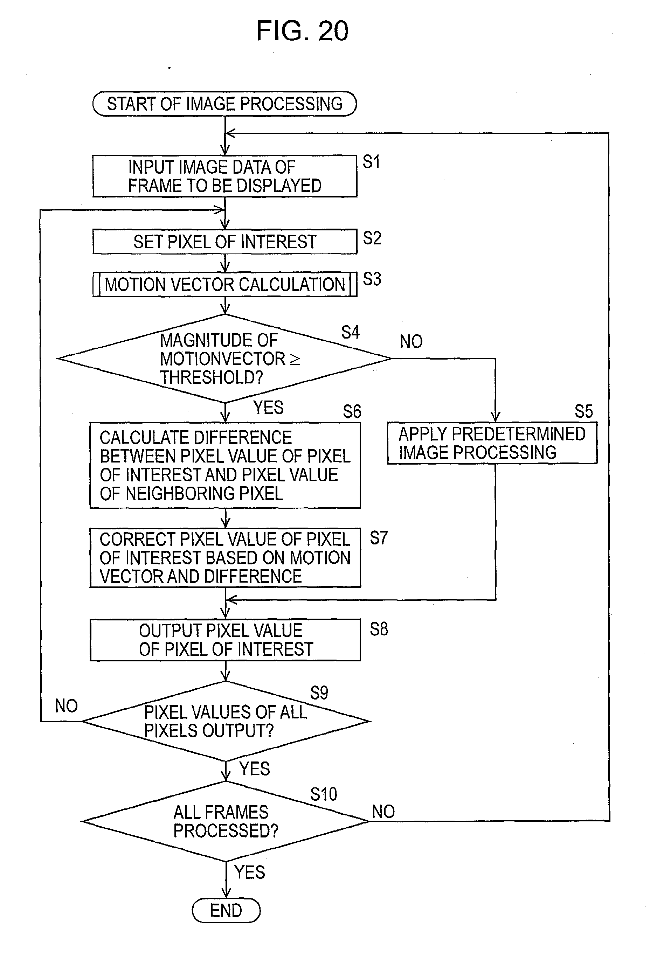

According to embodiments of the present invention, a second image processing method is provided. The second image processing method is executed by an information processing apparatus (e.g., the image processing apparatus 1 in Fig. 1). The method includes: a candidate generating step (e.g., processing in step S22 in Fig. 21) of setting as a pixel of interest a predetermined pixel from among pixels constituting a first access unit and comparing the first access unit with a second access unit preceding the first access unit to generate a candidate motion vector at the pixel of interest; a motion-vector determining step (e.g., processing in step S24 in Fig. 21) of determining as a motion vector at the pixel of interest a candidate motion vector with highest frequency from among the candidate motion vector at the pixel of interest and candidate motion vectors at pixels neighboring the pixel of interest generated in the candidate generating step; a correction step (e.g., processing in steps 25 to 28 in Fig. 21) of correcting the motion vector determined in the motion-vector determining step; and a processing control step (e.g., processing in step S7 after the motion-vector calculation in step S3 in Fig. 20) of controlling the information processing apparatus to carry out predetermined processing using the motion vector corrected in the correction step. In the correction step, the motion vector is corrected (e.g., processing step S25 in Fig. 21) by a correction method based on a characteristic of the predetermined processing by the image processing apparatus in the processing control step.

According to embodiments of the present invention, a second computer-executable program is provided. The second program is executed by a computer (e.g., the CPU 201 in Fig. 23) for controlling a processing executing apparatus (e.g., the image processing apparatus 1 in Fig. 1) for applying predetermined processing to a predetermined one of a plurality of access units constituting a moving image, wherein the predetermined processing uses a motion vector at each of pixels on the predetermined access unit. The program includes: a candidate generating step (e.g., processing in step S22 in Fig. 21) of setting as a pixel of interest a predetermined pixel from among pixels constituting a first access unit and comparing the first access unit with a second access unit preceding the first access unit to generate a candidate motion vector at the pixel of interest; a motion-vector determining step (e.g., processing in step S24 in Fig. 21) of determining as a motion vector at the pixel of interest a candidate motion vector with highest frequency from among the candidate motion vector at the pixel of interest and candidate motion vectors at pixels neighboring the pixel of interest generated in the candidate generating step; a correction step (e.g., processing in steps 25 to 28 in Fig. 21) of correcting the motion vector determined in the motion-vector determining step; and a processing control step (e.g., processing in step S7 after the motion-vector calculation in Step S3 in Fig. 20) of controlling the processing executing apparatus to carry out the predetermined processing using the motion vector corrected in the correction step. In the correction step, the motion vector is corrected (e.g., processing step S25 in Fig. 21) by a correction method based on a characteristic of the predetermined processing by the processing executing apparatus in the processing control step.

An image processing apparatus embodying the present invention will now be described with reference to the drawings.

Fig. 1 depicts an example structure of an image processing apparatus 1 embodying the present invention.

Referring to Fig. 1, the image processing apparatus 1 controls the display of a moving image on a hold-type display apparatus 2 realized by, for example, an LCD apparatus. More specifically, the image processing apparatus 1 issues a command for sequentially displaying each of a plurality of frames constituting the moving image. As a result, the hold-type display apparatus 2 causes each of display elements (not shown in the figure) to display the corresponding pixel of a plurality of pixels constituting a first frame for a predetermined time after the display of the first frame has been specified and retains (holds) the display of at least some of the display elements, as described above. In short, at least some of the display elements are hold-displayed for the predetermined time.

Although the image processing apparatus 1 processes (displays) a moving image in units of frames according to this embodiment as described above for the sake of simplified description, a moving image may be processed or displayed in units of fields. In other words, the image processing apparatus 1 is capable of performing image processing in access units, which are defined as units for image processing, such as frames and fields, in the present specification. In the following description, the access unit employed by the image processing apparatus 1 is presumed to be a frame.

Furthermore, it is also presumed that the hold-type display apparatus 2 causes each of display elements to display the corresponding pixel of a plurality of pixels constituting a first frame for a predetermined time from when the display of the first frame is specified to when the display of the subsequent second frame is specified, and retains (holds) the display of at least some of the display elements (hold-displays the display elements).

In more detail, the image processing apparatus 1 sequentially receives the image data of a plurality of frames constituting a moving image. In other words, the image processing apparatus 1 receives the image data of the target display frame (e.g., the pixel values of all pixels constituting the target display frame). More specifically, the image data of the target display frame is input to an image processing section 11, an image processing section 12, a reference-image storing section 13, and a motion detecting section 14.

The image processing section 11 applies predetermined image processing to the image data of the target display frame, one pixel at a time, and outputs the processed image data to a switching section 15. More specifically, the image processing section 11 applies predetermined image processing to each of a plurality of pixels constituting the target display frame to correct the pixel values of these pixels and sequentially outputs the corrected pixel values to the switching section 15 in a predetermined order.

The image processing carried out by the image processing section 11 is not limited to particular processing. In the example of Fig. 1, the image processing section 11 receives two items of information: image data of a reference image (frame previous to the target display frame, which is, hereinafter, referred to just as the previous frame) output from the reference-image storing section 13 to be described later and the detection result (motion vector of each of the pixels constituting the target display frame) supplied by the motion detecting section 14 to be described later. Then, the image processing section 11 may carry out any of the following image processing: image processing in which the two items of information are used, image processing in which one of the two items of information is used, and image processing in which none of the two items of information is used. More specifically, for example, the image processing section 11 can correct the pixel values of pixels constituting the target display frame according to a table (not shown in the figure) based on a predetermined rule.

Furthermore, the image processing section 11 is not a component essential to the image processing apparatus 1, and thus can be omitted. If this is the case, the image data of the target display frame is input to the image processing section 12, the reference-image storing section 13, the motion detecting section 14, and an input end of the switching section 15 (of the two input ends of the switching section 15, the input end connected to the image processing apparatus 11).

From among the image data (pixel values of pixels) constituting the target display frame, the image processing section 12 can perform correction (including 0 correction) of the pixel values of pixels corresponding to a moving object (e.g., pixels whose motion vectors detected by the motion detecting section 14 have a magnitude equal to a threshold or more), and outputs the corrected pixel values to the switching section 15.

The image processing section 12 can correct the pixel values of pixels corresponding to an object moving in any spatial direction on the target display frame. In the following description, the pixel at the upper-left corner of the target display frame is defined as a reference pixel for the sake of simplified description. Under this definition, embodiments of the present invention presume that an object moving in the horizontal direction to the right of the reference pixel (hereinafter, referred to as the spatial direction X) or in the direction opposite to the spatial direction X is processed by the image processing section 12. Accordingly, although the direction of the motion vector of a pixel of interest detected by the motion detecting section 14 according to embodiments of the present invention is not limited to a particular spatial direction on the target frame, the following description presumes that the motion detecting section 14 detects a pixel of interest whose motion vector has a direction equal to the spatial direction X or the opposite direction to make the description more understandable.

The image processing section 12 includes a step-edge detecting section 21 and a correcting section 22.

The step-edge detecting section 21 detects pixels corresponding to an edge portion of a moving object from among the image data of the target display frame based on the detection result (motion vector) supplied by the motion detecting section 14, and supplies the detected pixels to the correcting section 22.

More specifically, the step-edge detecting section 21, which, say, captures a step edge as an object, disassembles the image data of the target display frame into image data items of step edges arranged in the spatial direction X, detects the pixels corresponding to an edge portion in each of the step edges, and supplies the detected pixels to the correcting section 22.

Here, a step edge is a collection of two different groups of pixels continuously arranged in a row: one group of pixels has a first pixel value and is arranged in a predetermined direction (spatial direction X in this example), and the other group of pixels has a second pixel value different from the first pixel value and is arranged in the same direction.

The step-edge detecting section 21 calculates the difference between the pixel value of a pixel of interest and the pixel value of a pixel neighboring the pixel of interest in a predetermined direction (the spatial direction X or the opposite direction in this example). Then, if the calculation result (difference value) is not, for example, 0, the step-edge detecting section 21 determines the pixel of interest as a pixel corresponding to the edge portion of the step edge.

Since the main object here is to suppress motion blurring, it is sufficient to detect the edge portion of a moving step edge only.

For this purpose, if the magnitude of the motion vector of the pixel of interest supplied by the motion detecting section 14 is equal to, for example, a threshold or more, the step-edge detecting section 21 determines that the step edge including the pixel of interest as one component is moving and carries out processing. More specifically, the step-edge detecting section 21 calculates the difference value between the pixel value of the pixel of interest and the pixel value of its neighboring pixel (hereinafter, referred to just as the difference value), and supplies as a detection result the difference value and the pixel value of the pixel of interest to the correcting section 22.

In contrast, if the magnitude of the motion vector of the pixel of interest supplied by the motion detecting section 14 is, for example, less than the threshold, the step-edge detecting section 21 determines that the step edge including the pixel of interest as one component is not moving and cancels the processing.

If the magnitude of the motion vector of the pixel of interest supplied by the motion detecting section 14 is equal to, for example, the threshold or more (i.e., the step edge including the pixel of interest as one component is moving in the spatial direction X or in the opposite direction), the correcting section 22 performs correction (including 0 correction) of the pixel value of the pixel of interest supplied by the step-edge detecting section 21. At this time, the correcting section 22 corrects the pixel value of the pixel of interest based on the motion vector (moving direction and amount of motion of the step edge) of the pixel of interest supplied by the motion detecting section 14 and the difference value (height of the step edge) supplied by the step-edge detecting section 21.

More specifically, for example, if the supplied difference value is not 0 and the magnitude of the supplied motion vector is equal to the threshold or more, then the correcting section 22 determines that the pixel of interest is the pixel corresponding to the edge portion of a moving step edge, and corrects the pixel value of the pixel of interest based on the supplied difference value and motion vector.

In contrast, for example, if the supplied difference value is 0 and the magnitude of the supplied motion vector is equal to the threshold or more, the correcting section 22 determines that the pixel of interest is one component of a moving step edge but is not the pixel corresponding to the edge portion (i.e., the pixel of interest is a pixel other than the pixel corresponding to the edge portion), and carries out 0 correction of the pixel of interest, that is, does not correct the pixel of interest.

Furthermore, for example, if the magnitude of the supplied motion vector is less than the threshold, the correcting section 22, as in the step-edge detecting section 21, determines that the step edge including the pixel of interest as one component is not moving, and thus cancels the processing (cancels correction processing including 0 correction).

The correcting section 22 can employ any pixel-value correction method, as long as the pixel value of the pixel of interest corresponding to the edge portion of a moving step edge is corrected based on the motion vector of the pixel of interest detected by the motion detecting section 14. More specifically, the correcting section 22 can employ, for example, the following correction method.

The correcting section 22 calculates the right-hand side of Equation (1) shown below to obtain a correction value R as the left-hand side, and corrects the pixel value of the pixel of interest by adding the calculated correction value R to the pixel value of the pixel of interest.

$$R = \frac{Er \times e^{\frac{-T}{v \times \tau}}}{1 - e^{\frac{-T}{v \times \tau}}} \tag{1}$$

In Equation (1), Er represents the difference value supplied by the step-edge detecting section 21, and V represents the magnitude of the motion vector supplied by the motion detecting section 14. Equation (1) presumes that the time response of all display elements of the hold-type display apparatus 2 (e.g., all liquid crystal regions if the hold-type display apparatus 2 is an LCD apparatus) is a first-order lag element with a certain time constant, which is represented with $\tau$ in Equation (1). Furthermore, T in Equation (1) represents the time for which the target display frame is displayed (period of time from when the display of the target display frame is specified to when the display of the subsequent frame is specified). Hereinafter, the time T is referred to as the frame time T. In LCD apparatuses, the frame time T is typically 16.6 ms.

The reference-image storing section 13 stores the image data of the target display frame for use as image data of a reference image for the subsequent frame.

More specifically, if the image data of a new frame is input as image data of the target display frame, the motion detecting section 14 (and the above-described image processing section 11) acquires the image data of the previous frame (frame that was the target display frame just before the current processing) stored in the reference-image storing section 13 for use as the image data of a reference image for the current target display frame. Then, the motion detecting section 14 compares the image data of the target display frame with the image data of the reference image to detect the motion vector of the pixel of interest on the target display frame, and supplies it to the image processing section 11, the image processing section 12 (the step-edge detecting section 21 and the correcting section 22), and the switching section 15.

In fact, the motion detecting section 14 can detect a motion vector with any direction on a two-dimensional plane parallel to the spatial direction X and a spatial direction Y. In short, the direction of a motion vector can be any direction on this two-dimensional plane. In this example, however, it is presumed that only step edges moving in the spatial direction X or in the opposite direction are detected, as described above, and hence the motion detecting section 14 only detects a pixel of interest whose motion vector has a direction equal to the spatial direction X or the opposite direction to make the description more understandable.

More specifically, if a step edge moves by, for example, N (N is any positive integer) pixels in the spatial direction X from one frame to the subsequent frame, the motion detecting section 14 detects "+N" as the motion vector (the motion vector at the pixel of interest, which is one component of the step edge) of the step edge. On the other hand, if the step edge moves by N pixels in the direction opposite to the spatial direction X from one frame to the subsequent frame, the motion detecting section 14 detects "-N" as the motion vector of the step edge. In this example, the direction of a motion vector is denoted with "+" if the step edge moves in the spatial direction X, and the direction of a motion vector is denoted with "-" if the step edge moves in the direction opposite to the spatial direction X, as described above.

The switching section 15 switches the input according to the detection result (motion vector) supplied by the motion detecting section 14.

More specifically, if the magnitude of the motion vector of the pixel of interest supplied by the motion detecting section 14 is less than a threshold (if the pixel of interest is not a pixel included in a moving step edge), the switching section 15 switches the input to the image processing section 11 and supplies the data (pixel value) of the pixel of interest supplied by the image processing section 11 to a display control section 16.

In contrast, if the magnitude of the motion vector of the pixel of interest supplied by the motion detecting section 14 is equal to the threshold or more (if the pixel of interest is a pixel included in a moving step edge), the switching section 15 switches the input to the correcting section 22 of the image processing section 12, and supplies the data (pixel value) of the pixel of interest supplied by the correcting section 22 to the display control section 16.

The display control section 16 converts the data (pixel value) of each of the pixels constituting the target display frame, i.e., the pixels sequentially supplied by the switching section 15, into a predetermined signal format (signal indicating the target level for the corresponding display element in the hold-type display apparatus 2), and then outputs it to the hold-type display apparatus 2. In short, the display control section 16 carries out this processing to issue a command for displaying the target display frame on the hold-type display apparatus 2.

As described above, according to the image processing apparatus 1 of this embodiment, the pixel value of the pixel of interest is corrected based on the motion vector detected by the motion detecting section 14. It should be noted here that this motion vector matches the motion vectors of other pixels neighboring the pixel of interest. In other words, in order to easily detect the motion vector of a pixel matching those of neighboring pixels, that is, in order to solve the above-described second problem, the motion detecting section 14 according to this embodiment has a structure as shown in Fig. 2. Details of the motion detecting section 14 according to this embodiment will now be described with reference to Fig. 2.

Referring to Fig. 2, the motion detecting section 14 according to this embodiment includes a low-pass filter (hereinafter, referred to as an LPF) 31, an LPF 32, a luminance-gradient detecting section 33, a template matching section 34, a histogram section 35, a motion-vector correcting section 36, and an LPF 37.

An input image (image data), that is, the image data of the target display frame is supplied via the LPF 31 to the luminance-gradient detecting section 33 and the template matching section 34.

The luminance-gradient detecting section 33 detects the luminance gradient at the location of a pixel of interest on the target display frame.

The term "luminance gradient" is defined as the following value. Assuming function f(x) that receives a coordinate value in a predetermined direction (e.g., coordinate value x in the spatial direction X in this example) as a parameter and outputs the luminance (pixel value) of the input coordinate x, the luminance gradient at location i (i is a coordinate value in the spatial direction X) of a pixel is defined as the absolute value of the first derivative of function f(x) at the location i. In short, the luminance gradient at the location i is defined as $|f'(i)|$.

The generation of function f(x) itself and the calculation of the first derivative of function f(x) require the luminance-gradient detecting section 33 to perform computationally intensive processing. For this reason, for example, a value "slope" in Equation (2) shown below is defined as the luminance gradient. In short, the luminance-gradient detecting section 33 calculates the right-hand side of Equation (2) to obtain the luminance gradient "slope".

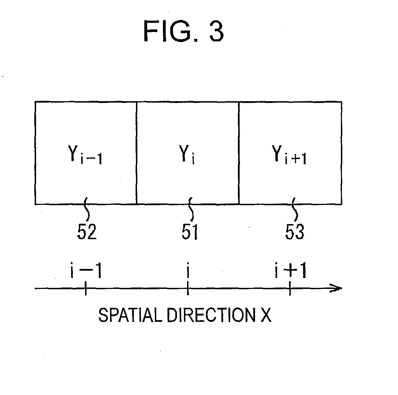

As a result, the luminance-gradient detecting section 33 can easily (with light load) calculate the luminance gradient "slope" at the location of a pixel of interest (e.g., a pixel 51 shown in Fig. 3) on the target display frame.

$$\text{slope}=\max \left( \left| Y_i - Y_{i-1} \right|, \left| Y_i - Y_{i+1} \right| \right) \tag{2}$$

In Equation (2), Yi indicates the luminance (pixel value) of the pixel of interest 51 at the location i, as shown in Fig. 3. Yi-1 indicates the luminance (pixel value) of a pixel 52 to the left of the pixel of interest 51 (the pixel 52 at a location i-1 neighboring the pixel of interest 51 in the direction opposite to the spatial direction X). Yi+1 indicates the luminance (pixel value) of a pixel 53 to the right of the pixel of interest 51 (the pixel 53 at a location i+1 neighboring the pixel of interest 51 in the spatial direction X). Furthermore, max(A, B,..., N) represents a function that outputs the maximum value of input parameter values A to N. This function max() can receive any number of parameters (N can be any number).

The luminance-gradient detecting section 33 calculates the absolute difference A between the luminance Yi of the pixel of interest 51 and the luminance Yi-1 of the pixel 52 to the left and the absolute difference B between the luminance Yi of the pixel of interest 51 and the luminance Yi+1 of the pixel 53 to the right. The luminance-gradient detecting section 33 then supplies the absolute difference A or B, whichever is larger (maximum value), to the motion-vector correcting section 36 as the luminance gradient "slope" at the location of the pixel of interest 51.

As described above, the image data of the target display frame is also supplied to the template matching section 34 via the LPF 31. At this time, the template matching section 34 further receives via the LPF 32 the image data of the previous frame (previous target display frame) stored in the reference-image storing section 13 as the image data of a reference image for the target display frame.

The template matching section 34 then extracts from the previous target display frame a predetermined area (hereinafter, referred to as a window) including at least the location corresponding to the location of the pixel of interest, determines the area on the current target display frame that matches the extracted window, determines a candidate motion vector "pvec" of the pixel of interest based on the matching result, and finally supplies it to the histogram section 35.

Furthermore, the template matching section 34 generates a control signal "flag" used by the motion-vector correcting section 36 and supplies it to the motion-vector correcting section 36. Details of the control signal "flag" will be described later.

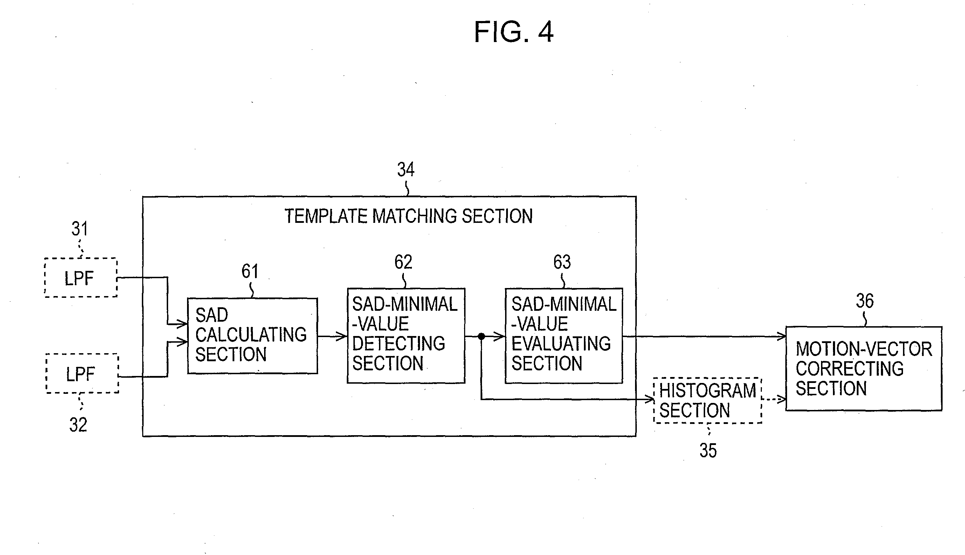

Details of this template matching section 34 will now be described with reference to Figs. 4 to 10.

Fig. 4 shows a detailed example structure of the template matching section 34 according to this embodiment.

Referring to Fig. 4, the template matching section 34 according to this embodiment includes a SAD (Sum of Absolute Difference) calculating section 61, a SAD-minimal-value detecting section 62, and a SAD-minimal-value evaluating section 63.

Referring to Fig. 5, the SAD calculating section 61 extracts from the previous frame, for example, a window 72 composed of a predetermined number of pixels (five pixels in the example of Fig. 5) arranged in the spatial direction X in a row such that the window 72 has a center pixel 71 disposed at a location i (indicating a coordinate value in the spatial direction X described above) corresponding to the location i of the pixel of interest 51 on the target display frame.

Furthermore, the SAD calculating section 61 extracts the following area (referred to as a comparison area, as distinct from a window) from the target display frame. More specifically, a comparison area 73-n composed of a predetermined number of pixels (the same number of pixels as that of the window 72, which is five in the example of Fig. 5) arranged in the spatial direction X in a row is extracted, such that the comparison area 73-n has the center pixel at a location i+n (hereinafter, referred to as a search location i+n), the location i+n being n pixels (n is an integer in a predetermined range, and is an integer from "-6" to "+6" in the example of Fig. 5) away from the location i of the pixel of interest 51 in the spatial direction X or in the opposite direction. Although only the comparison area 73-(-6) corresponding to the search location i-6 and the comparison area 73-(+6) corresponding to the search location i+6 are shown in the example of Fig. 5, a total of 13 comparison areas 73-n, including the comparison area 73-(-6) and the comparison area 73-(+6), are extracted sequentially in a predetermined order.

The SAD calculating section 61 calculates the correlation between the window 72 and each of the 13 comparison areas 73-n (the comparison area 73-(-6) to the comparison area 73-(+6)) using a predetermined evaluation function, and supplies the calculation results to the SAD-minimal-value detecting section 62.

The evaluation function used by the SAD calculating section 61 is not limited to a particular function. The SAD calculating section 61 can use a function such as a normalized correlation function and an SSD (Sum of Squared Difference) function. In the following description, the SAD calculating section 61 is presumed to use a SAD.

In short, the SAD calculating section 61 calculates the right-hand side of Equation (3) shown below to obtain a correlation value SAD(j) (j is i+n, and is any integer in the search range i-6 to i+6 in the example of Fig. 5) between the window 72 and each of the comparison areas 73-n, and supplies the obtained correlation values to the SAD-minimal-value detecting section 62.

$$SAD(j) = \sum_{k=1}^{5} |C_k^j - P_k^i|$$

$$\ldots (3)$$

As shown in Fig. 5, $C_k^j$ in Equation (3) indicates the luminance (pixel value) of the k-th pixel from the left of the comparison area 73-n at the search location j (j=i+n). Similarly, $P_k^i$ in Equation (3) indicates the luminance (pixel value) of the k-th pixel from the left of the window 72 having the center pixel 71 at the location i.

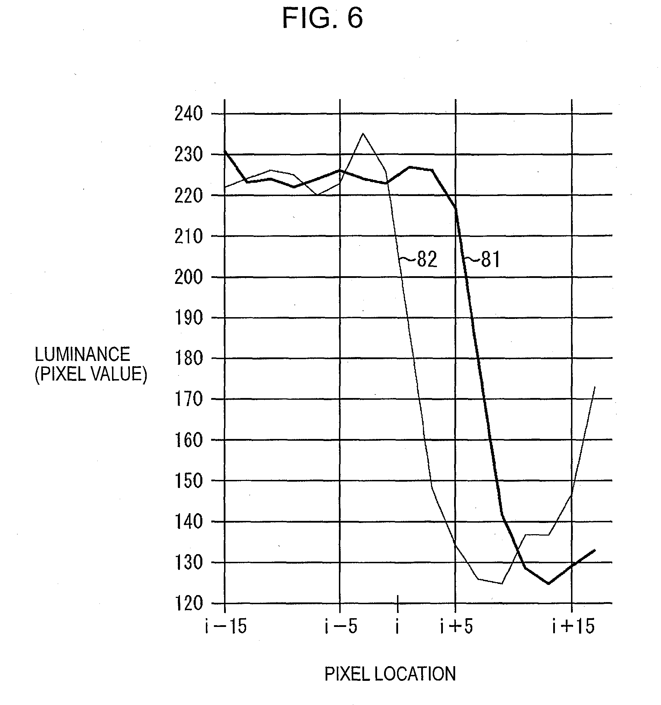

More specifically, assume that, as shown in Fig. 6, a change in luminance (pixel value) in the spatial direction X on the target display frame is depicted by a curve 81 and a change in luminance (pixel value) in the spatial direction X on the previous frame is depicted by a curve 82. In Fig. 6, the vertical axis represents luminance (pixel values) and the horizontal axis represents pixel locations. Furthermore, as described above, the pixel location i represents the location of the pixel of interest 51.

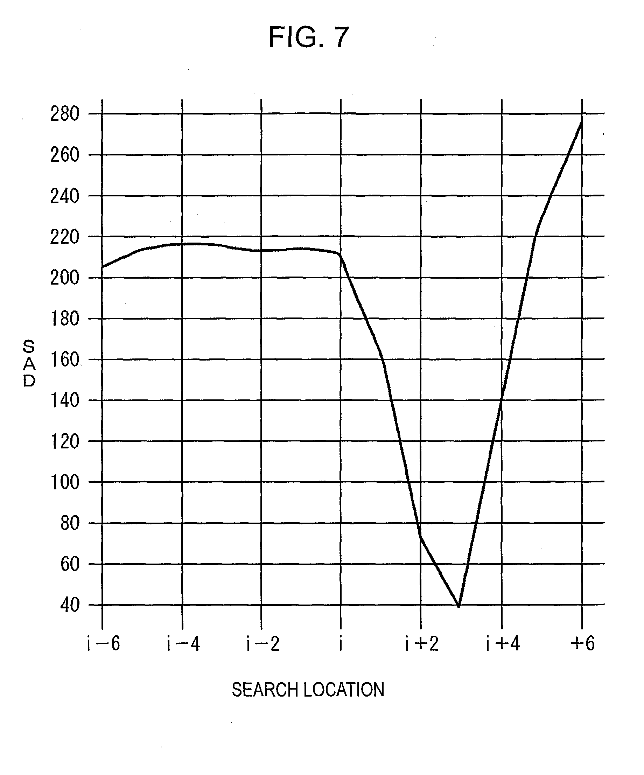

Fig. 7 shows the calculation results by the SAD calculating section 61, that is, the correlation values SAD(j (=i+n)). In Fig. 7, the vertical axis represents correlation values SAD(j), and the horizontal axis represents search locations. More specifically, Fig. 7 represents SAD(i+n(=j)) at the search location i+n between the window 72 composed of five pixels having the pixel values (luminance) shown by the curve 82 in Fig. 6 and each of the comparison areas 73-n composed of five pixels having the pixel values (luminance) shown by the curve 81 in Fig. 6.

Referring back to Fig. 4, the smaller the correlation value SAD(j), the higher the correlation; the SAD-minimal-value detecting section 62 detects the minimum value "min" from among the correlation values SAD(j(=i+n)) supplied by the SAD calculating section 61, and supplies the search location "pos" (pos=i+3 in the example of Fig. 7) corresponding to the minimum value "min" to the SAD-minimal-value evaluating section 63 and the histogram section 35.

The minimum value "min" corresponds to the correlation value SAD(z) at the minimal point (z, SAD(z)) (here, z is one of integers from i-6 to i+6) of the curve connecting the correlation values SAD(j). More specifically, in the example of Fig. 7, the minimum value "min" is the correlation value SAD(i+3) (=about 40) at the minimal point (i+3,SAD (i+3)). Hereinafter, the minimum value "min" is also referred to as the minimal value "min".

The above-described processing by the SAD calculating section 61 and the SAD-minimal-value detecting section 62 may be outlined as follows. The SAD calculating section 61 detects the pixel 71 disposed at the location i on the previous frame corresponding to the location of the pixel of interest 51, and extracts the window 72 including at least the pixel 71. The SAD calculating section 61 then sequentially shifts the window 72 along the horizontal line (line parallel to the spatial direction X) including the pixel of interest 51 on the target display frame. At this time, the SAD calculating section 61 uses a predetermined evaluation function (SAD in this example) to calculate the degree of coincidence (correlation) between the window 72 and the area 73-n overlapping the window 72 (comparison area) at each of the shift locations (search locations) i+n of the window 72. The SAD-minimal-value detecting section 62 then sets the center pixel in the comparison area 73-n having the highest degree of coincidence (correlation) (i.e., the minimal value "min") as the counterpart pixel for the center pixel 71 (i.e., the pixel 71 corresponding to the pixel of interest 51) of the window 72. More specifically, from among the pixels constituting the target display frame, the pixel arranged at the search location "pos" corresponding to the minimal value "min" is set as the counterpart pixel for the center pixel 71 of the window 72.

The technique carried out by the SAD calculating section 61 and the SAD-minimal-value detecting section 62 is referred to as, for example, a window matching method, an area-based matching method, or a template matching method. The counterpart pixel is also called the counterpart point.

Strictly speaking, the histogram section 35 is supplied with a candidate motion vector "pvec" which is a vector n originating from the location i of the pixel of interest 51 and terminating at the search location pos (=i+n) (n indicates the amount of shift and the shift direction with respect to the reference location i of the window 72). In this example, as described above, the absolute value of the value n indicates the magnitude of the vector (candidate motion vector "pvec") and the sign of the value n indicates the direction of the vector (candidate motion vector "pvec"). In more detail, if the value n is positive, the direction of the candidate motion vector "pvec" is the spatial direction X, that is, the right direction with respect to the pixel of interest 51 in Fig. 5. On the other hand, if the value n is negative, the direction of the candidate motion vector "pvec" is the direction opposite to the spatial direction X, that is, the left direction with respect to the pixel of interest 51 in Fig. 5. More specifically, in the example of Fig. 7, "+3" is supplied to the histogram section 35 as the candidate motion vector "pvec" of the pixel of interest 51.

More accurately, as described later, the histogram section 35 generates a histogram of the candidate motion vectors "pvec" of the pixel of interest 51 and pixels neighboring the pixel 51, and determines a motion vector "vec" of the pixel of interest 51 based on this histogram. For this purpose, the SAD calculating section 61 and the SAD-minimal-value detecting section 62 obtain not only the candidate motion vector "pvec" of the pixel of interest 51 but also the candidate motion vector "pvec" of each of the pixels constituting an area composed of a predetermined number of pixels arranged in a row in the direction X, where the center pixel is the pixel of interest 51 (e.g., an area 95 shown in Fig. 11 to be describe later) in the same manner as described above, and supplies them to the histogram section 35.

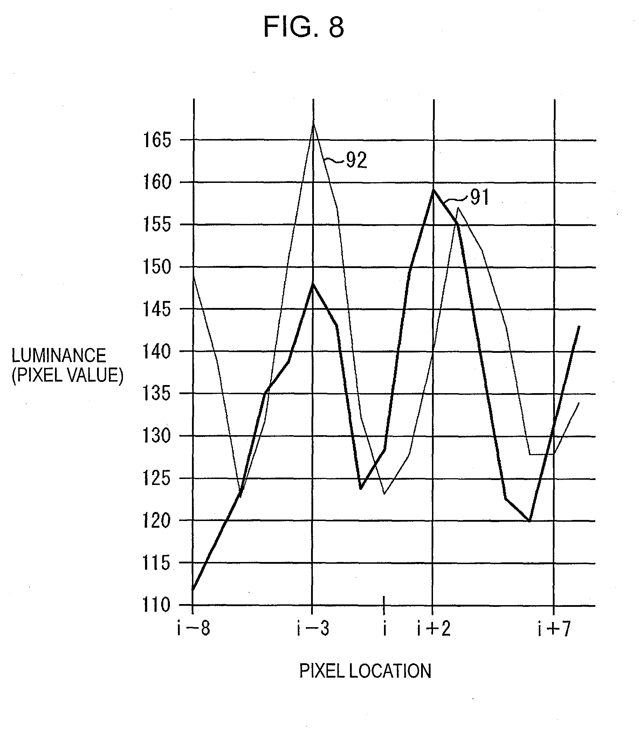

Assume that, as shown in Fig. 8, a change in luminance (pixel value) in the spatial direction X on the target display frame is depicted by a curve 91 and a change in luminance (pixel value) in the spatial direction X on the previous frame is depicted by a curve 92. In Fig. 8, the vertical axis represents luminance (pixel values) and the horizontal axis represents pixel locations. Furthermore, as described above, the pixel location i represents the location of the pixel of interest 51.

Fig. 9 shows the calculation results by the SAD calculating section 61, that is, the correlation values SAD(j (=i+n)). In Fig. 9, the vertical axis represents correlation values SAD(j), and the horizontal axis represents search locations. More specifically, Fig. 9 represents SAD(i+n(=j)) at the search location i+n between the window 72 composed of five pixels having the pixel values (luminance) shown by the curve 92 in Fig. 8 and each of the comparison areas 73-n composed of five pixels having the pixel values (luminance) shown by the curve 91 in Fig. 8.

In Fig. 9, the curve connecting the correlation values SAD(j) has two minimal points: point (i-1, SAD(i-1)) and point (i+5, SAD(i+5)). In short, two minimal points exist in the example of Fig. 9. If a plurality of minimal points exists as described above, the SAD calculating section 61 employs, as the minimal value "min", the minimum value from among the correlation values SAD(j) corresponding to the plurality of minimal points, that is, the minimum value of all correlation values SAD(j). More specifically, in the example of Fig. 9, the correlation value SAD(i+5) (=about 27) at the minimal point (i+5,SAD(i+5)) is employed as the minimal value "min". For this reason, the pixel at the center of the comparison area 73-5 (not shown in the figure), that is, the pixel at the location i+5 on the target display frame is set as the counterpart pixel (counterpart point) for the center pixel 71 of the window 72. In short, "+5" is supplied to the histogram section 35 as the candidate motion vector "pvec" of the pixel of interest 51.

As shown in Fig. 9, however, since the difference between this minimal value "min", that is, the correlation value SAD(i+5) (=about 27) at the minimal point (i+5,SAD(i+5)) and the correlation value SAD(i-1) (=about 30) at the minimal point (i-1,SAD(i-1)) is small, it is not always correct to say that the counterpart pixel (counterpart point) for the center pixel 71 of the window 72 is the pixel at the location i+5. In other words, it is possible that the counterpart pixel (counterpart point) for the center pixel 71 in the window 72 is the pixel at the location i-1.

If, as described above, there are two or more possible (candidate) counterpart pixels (counterpart points) for the center pixel 71 in the window 72 (i.e., if the difference between the correlation values SAD(j) at two or more minimal points of SAD(j) expressed in the form of a curve as shown in Fig. 9 is small), the confidence level of the determined counterpart pixel (the pixel corresponding to the minimal point at the bottom), that is, the confidence level of the candidate motion vector "pvec" of the pixel of interest 51 supplied to the histogram section 35, is low.

In addition, even if there is only one possible (candidate) counterpart pixel (counterpart point) for the center pixel 71 of the window 72 (i.e., if SAD(j) expressed in the form of a curve has only one minimal point, as shown in Fig. 7, or if, although not shown in the figure, SAD(j) expressed in the form of a curve has two or more minimal points and the difference between the minimum correlation value SAD(j) (=minimal value "min") and each of the other correlation values SAD(j) is large), the confidence level of the counterpart pixel, that is, the confidence level of the candidate motion vector "pvec" of the pixel of interest 51 supplied to the histogram section 35 is low, as long as the correlation value SAD(j) (=minimal value "min") of the determined counterpart pixel is not sufficiently small.

In order to evaluate such a minimal value "min", that is, the confidence level of the counterpart pixel being the pixel at the minimal value "min" (the confidence level of the candidate motion vector "pvec" of the pixel of interest 51 supplied to the histogram section 35), the template matching section 34 according to this embodiment has a structure as shown in Fig. 4. More specifically, as shown in Fig. 4, the template matching section 34 according to this embodiment includes the SAD-minimal-value evaluating section 63 in addition to the above-described SAD calculating section 61 and the SAD-minimal-value detecting section 62.

The SAD-minimal-value evaluating section 63 evaluates the confidence level of the pixel at the minimal value "min", being the counterpart pixel (confidence level of the candidate motion vector "pvec" of the pixel of interest 51 supplied to the histogram section 35). If the SAD-minimal-value evaluating section 63 determines that the confidence level is low, it supplies, for example, "1" as the above-described control signal "flag" to the motion-vector correcting section 36. In this case, as described later, the motion-vector correcting section 36 corrects the motion vector vec of the pixel of interest 51.

In contrast, if the SAD-minimal-value evaluating section 63 determines that the above-described confidence level is high, it supplies, for example, "0" as the above-described control signal "flag" to the motion-vector correcting section 36. In this case, as described later, the motion-vector correcting section 36 cancels (does not perform) the correction of the motion vector vec of the pixel of interest 51.

More specifically, according to this embodiment, for example, a value required by the SAD-minimal-value evaluating section 63 to carry out the above-described evaluation is calculated or detected by the SAD-minimal-value detecting section 62 and is supplied to the SAD-minimal-value evaluating section 36.

More specifically, according to this embodiment, values detected by the SAD-minimal-value detecting section 62 include not only the above-described minimal value "min", that is, the minimum value "min" of the correlation values SAD(j) (hereinafter, referred to as the minimal value "min1" to discriminate from the value min2 to be described below), but also, as shown in Fig. 10, the search location pos1 corresponding to the minimal value "min1", the second smallest correlation value SAD(j) to the minimal value "min1" (i.e., the second smallest value of all correlation values SAD(j), which is hereinafter referred to as the minimal value "min2"), and the search location pos2 corresponding to the minimal value "min2".

Furthermore, according to this embodiment, values calculated by the SAD-minimal-value detecting section 62 include the difference value "eval1" between the average SADave of the correlation values SAD(j) in the search range (from the search locations i-6 to i+6 in the example of Fig. 5) and the minimal value "min1" (depth "eval1" from the average SADave to the minimal value "min1"); and the difference value "eval2" between the average SADave and the minimal value "min2" (depth "eval2" from the average SADave to the minimal value "min2").

In this case (i.e., if the search range is the search locations from i-6 to i+6), the average SADave is calculated based on Equation (4) shown below.

$$SAD_{ave} = \frac{1}{2 \times 6 + 1} \sum_{j=i-6}^{i+6} SAD(j) \qquad \qquad \ldots (4)$$

Referring back to Fig. 4, if these values (minimal value min1, search location pos1, depth eval1, minimal value min2, search location pos2, and depth eval2) are supplied from the SAD-minimal-value detecting section 62 to the SAD-minimal-value evaluating section 63, it is determined whether the following first condition or second condition is satisfied.

The first condition is to satisfy all of Inequalities (5) to (7) shown below.

$$eval1 > eval\_thresh \qquad \qquad (5)$$

$$eval2 > eval\_thresh \qquad \qquad (6)$$

$$|pos1-pos2| > pos\_thresh \qquad \qquad (7)$$

In Inequalities (5) and (6), eval_thresh represents a predetermined threshold, which is preset. Likewise, pos_thresh in Inequality (7) represents a predetermined threshold, which is also preset.

As is apparent from Inequalities (5) to (7), the first condition is satisfied if two or more minimal points exist and the difference between the correlation values S(j) at every pair of these minimal points is small, as shown in Fig. 9. In other words, the first condition is satisfied if two or more candidate counterpart pixels (counterpart points) for the center pixel 71 in the window 72 exist, and, further if a confident counterpart pixel cannot be found from the candidates (the pixels at the search location i+5 and the search location i-1 are candidate counterpart pixels in the example of Fig. 9).

On the other hand, the second condition is to satisfy Inequality (8) shown below.

$$min1 > min\_thresh \qquad \qquad (8)$$

In inequality (8), min_thresh represents a predetermined threshold, which is a preset value.

As is apparent from Inequality (8), the second condition is satisfied if the minimal value "min1" is not sufficiently small. In other words, the second condition is satisfied if the association of the window 72 with the comparison area 73-n for the minimal value "min1" is not established confidently.

Therefore, if it is determined that at least one of the first and second conditions is satisfied, the SAD-minimal-value evaluating section 63 determines that the confidence level of the pixel at the minimal value "min1", being the counterpart pixel (confidence level of the candidate motion vector "pvec" of the pixel of interest 51 supplied to the histogram section 35), is low and outputs "1" as the control signal "flag" to the motion-vector correcting section 36.

In contrast, if it is determined that neither the first nor second condition is satisfied, the SAD-minimal-value evaluating section 63 determines that the confidence level of the pixel at the minimal value "min1", being the counterpart pixel (confidence level of the candidate motion vector "pvec" of the pixel of interest 51 supplied to the histogram section 35), is high and outputs "0" as the control signal "flag" to the motion-vector correcting section 36.

Referring back to Fig. 2, the histogram section 35 is supplied with the result of matching by the template matching section 34 against the area composed of a plurality of pixels including the pixel of interest 51 on the target display frame. In short, the candidate motion vector "pvec" of each of a plurality of pixels constituting the area is supplied to the histogram section 35. The histogram section 35 generates a histogram of the plurality of supplied candidate motion vectors pvec, detects the candidate motion vector "pvec" with the highest frequency by referring to the histogram, and supplies the detected candidate motion vector "pvec" as the motion vector vec of the pixel of interest 51 to the motion-vector correcting section 36.

An area for which a histogram is generated is not limited to a particular area, as long as the area includes the pixel of interest 51. In other words, the number of pixels constituting the area or the location of the pixel of interest 51 in the area is not limited. In this example, it is presumed that an area for which a histogram is generated is an area composed of 17 pixels arranged in a row in the spatial direction X, where the pixel of interest 51 is the center pixel of the arranged pixels. In other words, the area is composed of the pixel of interest 51 at the center, eight pixels at the left (in the direction opposite to the spatial direction X) of the pixel of interest 51, and eight pixels arranged at the right (in the spatial direction X) of the pixel of interest 51.

More specifically, assume that the template matching section 34 outputs the vector candidate pvec of each of the pixels constituting the area 95 shown in Fig. 11. In the area 95 of Fig. 11, each of the 17 segments represents a pixel. The center one of the 17 segments represents the pixel of interest 51. Furthermore, the value shown in each of the pixels (small segments) indicates an example of the candidate motion vector "pvec" of the corresponding pixel. It is noted that the positive sign "+" is omitted.

In this case, the histogram section 35 generates a histogram as shown in Fig. 12. In the example of Fig. 12, since the candidate motion vector "pvec" with the highest frequency (=7) is "+4", the histogram section 35 determines that the motion vector vec of the pixel of interest 51 is "+4", and supplies it to the motion-vector correcting section 36 in Fig. 2.

The motion-vector correcting section 36 appropriately corrects the motion vector vec of the pixel of interest 51 supplied by the histogram section 35 such that the motion vector vec of the pixel of interest 51 matches the motion vectors of other pixels neighboring the pixel of interest 51 based on the downstream processing (e.g., above-described processing by the image processing section 12 in Fig. 1 in this example), the result of the processing by the luminance-gradient detecting section 33 and the template matching section 34 (e.g., the above-described luminance gradient "slope" and control signal "flag" in this example), or the combination of the downstream processing and the result of the processing by the luminance-gradient detecting section 33 and the template matching section 34.

The motion vector vec of the pixel of interest 51 corrected by the motion-vector correcting section 36 is output externally via the LPF 37.

Details of this motion-vector correcting section 36 will now be described with reference to Figs. 13 to 19.

Fig. 13 shows a detailed example structure of the motion-vector correcting section 36 according to this embodiment.

A wide variety of motion-vector correcting sections 36 are conceivable, such as those shown in Figs. 18 and 19. When the motion-vector correcting sections 36 shown in Figs. 13, 18, and 19 need to be discriminated from one another, they are referred to as a motion-vector correcting section 36A, a motion-vector correcting section 36B, and a motion-vector correcting section 36C, respectively. On the other hand, the motion-vector correcting section 36A, the motion-vector correcting section 36B, and the motion-vector correcting section 36C are collectively referred to as the motion-vector correcting sections 36.

Referring to Fig. 13, the motion-vector correcting section 36A includes a downstream-processing correcting section 101, a switching section 102, a confidence-level evaluating section 103, and a confidence-level correcting section 104.

The downstream-processing correcting section 101 corrects the motion vector vec of the pixel of interest 51 according to the characteristics of the downstream processing, for example, the processing by the above-described image processing section 12 shown in Fig. 1.

Hereinafter, the motion vector vec before correction, the motion vector vec corrected by the downstream-processing correcting section 101, and the motion vector vec corrected by the confidence-level correcting section 104, to be described later, are referred to as the motion vector vec, the motion vector vec', and the motion vector vec ", respectively, if they need to be discriminated from one another. In contrast, if it is not necessary to discriminate among the motion vector vec, the motion vector vec', and the motion vector vec", they are referred to as the motion vector vec.

The downstream-processing correcting section 101 outputs the corrected motion vector vec', which is then supplied to the switching section 102.

The correction method employed by the downstream-processing correcting section 101 is not limited to a particular method. Instead, the downstream-processing correcting section 101 can employ a correction method appropriate for the characteristics of downstream processing.

A correction method appropriate for the processing by the correcting section 22 in Fig. 1, which is one of downstream processing operations, will now be introduced.

As described above, the correcting section 22 performs correction (including 0 correction) of the pixel value of the pixel of interest 51 supplied by the step-edge detecting section 21 in Fig. 1. More specifically, the correcting section 22 corrects the pixel value of the pixel of interest 51 based on the motion vector vec (strictly speaking, the corrected motion vector vec' or the motion vector vec") of the pixel of interest 51 supplied by the motion detecting section 14.

From the viewpoint of sections downstream of the motion detecting section 14, for example, the image processing section 12, it is not necessary to discriminate the motion vector vec, the motion vector vec', and the motion vector vec" from one another. Therefore, hereinafter, the expression "motion vector vec" is used in the description from the viewpoint of sections downstream of the motion detecting section 14, i.e., the description of processing downstream of the motion detecting section 14.

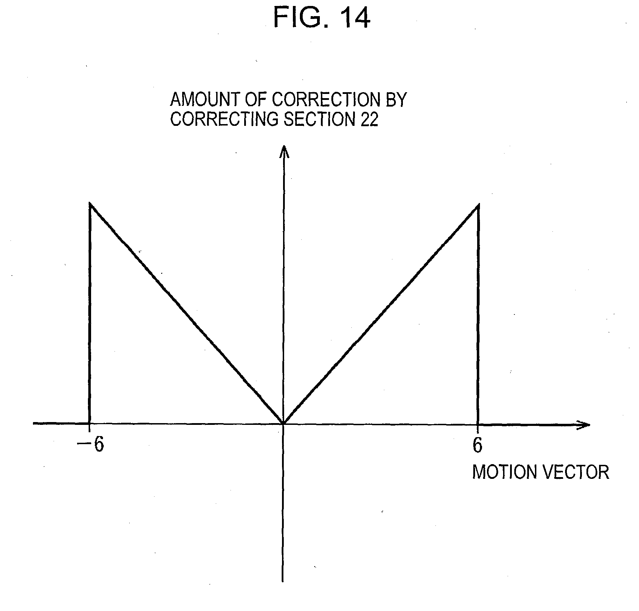

Assume that the correcting section 22 does not use the correction value R, which is the result of calculation based on the above-described Equation (1), but relies on the relationship shown in Fig. 14 to determine the amount of correction (value) for the pixel value of the pixel of interest 51.

Fig. 14 is a diagram depicting one example of a method for determining the amount of correction for the pixel value of the pixel of interest 51 in the correcting section 22. This method differs from the method based on Equation (1) described above.

According to the example of the correction method (processing by the correcting section 22) depicted in Fig. 14, the amount of correction for the pixel value linearly increases until the magnitude (absolute value) of the motion vector vec reaches 6 ("-6" or "+6"), which is the limit of the search range, whereas the amount of correction for the pixel value falls 0 (i.e., correction is cancelled) beyond the limit of the search range.

Therefore, if the pixel of interest 51 and its neighboring pixels with the motion vectors vec having magnitudes of about 6 are output from the motion detecting section 14, some of the output pixels are corrected with a large amount of correction, while other pixels are not corrected at all.

More specifically, assume that the pixel of interest 51 with the motion vector vec of "+6" is output from the motion detecting section 14 and that a neighboring pixel with the motion vector vec of "+7" is also output from the motion detecting section 14.

In this case, the pixel value of the pixel of interest 51 only is corrected with the maximum amount of correction, while the neighboring pixel is not corrected. This causes the pixel value (corrected value) of the pixel of interest 51 to mismatch the pixel value (value not corrected) of the neighboring pixel on the resultant correction image (target display frame). In short, the above-described second problem results.

In other words, the motion vector vec "+6" of the pixel of interest 51 is corrected to mismatch the motion vector vec "+7" of the neighboring pixel. That is, the motion vector vec "+6" of the pixel of interest 51 is corrected to a motion vector that does not match its neighbors.

In order to prevent the motion detecting section 14 from outputting motion vectors vec that does not match motion vectors of the neighboring pixels, that is, in order to prevent the amount of correction for pixel values from changing suddenly at the limits of the search range for the motion vector vec in the correcting section 22, the downstream-processing correcting section 101 in Fig. 13 can correct the motion vector vec into the motion vector vec' according to the relationship shown in, for example, Fig. 15.

Fig. 15 shows one example of a method for correcting the motion vector vec of the pixel of interest 51 in the downstream-processing correcting section 101.

According to the correction method in Fig. 15, the magnitude (absolute value) of the motion vector vec before correction, i.e., the motion vector vec supplied by the histogram section 35, is corrected based on the relationship vec'=vec until it reaches 3 ("-3" or "+3") (i.e., correction is not performed), the motion vector vec is corrected based on the relationship vec'=-vec+6 or -6 from 3 to 6 ("-6" or "+6"), and beyond the point of 6 the motion vector vec is corrected based on the relationship vec'=0.

If the downstream-processing correcting section 101 outputs the motion vector vec' according to the relationship shown in Fig. 15, the magnitude (absolute value) of the motion vector vec' does not exceed 3. In short, motion vectors vec with a magnitude of about 6 are not output. As a result, a sudden change in the amount of correction for pixel values, as described above, can be prevented. In short, the known second problem can be solved.

If the downstream-processing correcting section 101 in Fig. 13 performs correction based on the relationship shown in Fig. 15, a table defining the relationship shown in Fig. 15 may be stored so that the motion vector vec is corrected by referring to the table. Alternatively, the downstream-processing correcting section 101 may store functions defining the relationship described above, i.e., functions respectively defined according to the rules vec'=vec ($-3 \leq vec \leq 3$), vec'=-vec-6 ($-6 \leq vec < -3$), vec'=-vec+6 ($3 < vec \leq 6$), or vec'=0 ($vec < -6$, $6 < vec$) so that the motion vector vec is input to the corresponding function, which then outputs a corrected motion vector vec'.

As described above, the method shown in Fig. 15 is just one example of various methods for correcting the motion vector vec of the pixel of interest 51 in the downstream-processing correcting section 101, as appropriate for a case where the processing (downstream processing) by the correcting section 22 in Fig. 1 is characterized as shown in Fig. 14.

What is important, the correction method employed by the downstream-processing correcting section 101 is not limited to a particular one, as long as it is suitable for the characteristics of the downstream processing. Thus, the correction method can be switched according to the characteristics of the downstream processing.

Assume that the relevant downstream processing (not shown) is characterized in that it is applied to motion vectors vec with magnitudes (absolute values) of an intermediate level (e.g., 3) from among the motion vectors vec of the pixel of interest 51 output by the motion detecting section 14 so as to enhance the effect by the motion vectors vec with magnitudes of the intermediate level.

In this case, the downstream-processing correcting section 101 can correct the motion vector vec into the motion vector vec' according to the relationship shown in, for example, Fig. 16.

Fig. 16 shows another example (different from the one shown in Fig. 15) of a method for correcting the motion vector vec of the pixel of interest 51 in the downstream-processing correcting section 101.

According to the correction method in Fig. 16, the magnitude (absolute value) of the motion vector vec before correction, i.e., the motion vector vec supplied by the histogram section 35 is corrected based on the relationship vec'=2vec until it reaches 3 ("-3" or "+3"), the motion vector vec is corrected based on the relationship vec'=-2vec+12 or -12 from 3 to 6 ("-6" or "+6"), and beyond the point of 6 the motion vector vec is corrected based on the relationship vec'=0.

If the downstream-processing correcting section 101 performs correction based on the relationship shown in Fig. 16, a table defining the relationship shown in Fig. 16 may be stored so that the motion vector vec is corrected by referring to the table. Alternatively, the downstream-processing correcting section 101 may store functions defining the relationship described above, i.e., functions respectively defined according to the rules of vec'=2vec ($-3 \leq vec \leq 3$), vec'=-2vec-12 ($-6 \leq vec < -3$), vec'=-2vec+12 ($3 < vec \leq 6$), or vec'=0 ($vec < -6$, $6 < vec$) so that the motion vector vec is input to the corresponding function, which then outputs a corrected motion vector vec'.

Furthermore, if two or more downstream processing operations might or does exist, the downstream-processing correcting section 101 can switch its correction method as required to correct the motion vector vec. More specifically, if Q (Q is one or a larger integer) downstream processing operations exist, the downstream-processing correcting section 101 can correct one motion vector vec of the pixel of interest 51 according to each of the Q correction methods, and output the Q resultant motion vectors vec' individually.

Referring back to Fig. 13, the motion vector vec of the pixel of interest 51 output by the histogram section 35 is corrected into the motion vector vec' in this manner by the downstream-processing correcting section 101, and the motion vector vec' is then supplied to the switching section 102.

The switching section 102 switches the output destination to one of the external LPF 37 and the confidence-level correcting section 104 based on the control of the confidence-level evaluating section 103.

The confidence-level evaluating section 103 evaluates the confidence level of the motion vector vec of the pixel of interest 51 supplied by the histogram section 35 based on the luminance gradient "slope" supplied by the luminance-gradient detecting section 33 and the control signal "flag" supplied by the template matching section 34.

If the confidence-level evaluating section 103 determines that the confidence level of the motion vector vec of the pixel of interest 51 is low, it switches the output destination of the switching section 102 to the confidence-level correcting section 104.

For this reason, if the confidence-level evaluating section 103 evaluates that the confidence level of the motion vector vec of the pixel of interest 51 is low, the motion vector vec' corrected and output by the downstream-processing correcting section 101 is supplied to the confidence-level correcting section 104. Thereafter, as described later, the motion vector vec' corrected by the downstream-processing correcting section 101 is further corrected by the confidence-level correcting section 104 into the motion vector vec ", which is then supplied externally (image processing section 11, image processing section 12, and switching section 15 in Fig. 1) from the motion detecting section 14 via the LPF 37.

In contrast, if the confidence-level evaluating section 103 evaluates that the confidence level of the motion vector vec of the pixel of interest 51 is high, it switches the output destination of the switching section 102 to the external LPF 37.

Thus, if the confidence-level evaluating section 103 evaluates that the confidence level of the motion vector vec of the pixel of interest 51 is high, the motion vector vec' corrected and output by the downstream-processing correcting section 101 is not supplied to the confidence-level correcting section 104 but supplied externally from the motion detecting section 14 via the LPF 37.

In more detail, for example, if at least one of a third condition requiring that Inequality (9) shown below be established and a fourth condition requiring that the control signal "flag" be "1" is satisfied, the confidence-level evaluating section 103 evaluates that the confidence level of the motion vector vec of the pixel of interest 51 supplied by the histogram section 35 is low, switching the output destination of the switching section 102 to the confidence-level correcting section 104.

In contrast, if neither of the third and fourth conditions is satisfied, the motion-vector correcting section 36 evaluates that the confidence level of the motion vector vec of the pixel of interest 51 supplied by the histogram section 35 is high, switching the output destination of the switching section 102 to the external LPF 37.

$$slope < slope\_thresh \tag{9}$$

In Inequality (9), slope_thresh is a predetermined threshold, which is a preset value.

As is apparent from Inequality (9), if the luminance gradient at the pixel of interest 51 is small, i.e., if the pixel of interest 51 does not correspond to a characteristic portion, such as an edge portion of a step edge as described above, then the third condition is satisfied.

Furthermore, if the control signal "flag", which, as described above, can be said to be a signal indicating the result of evaluation about the confidence level of the motion vector vec of the pixel of interest 51 in the template matching section 34, is "1", i.e., if the template matching section 34 evaluates that the confidence level of the motion vector vec of the pixel of interest 51 is low, the fourth condition is satisfied.

If the output destination of the switching section 102 is switched to the confidence-level correcting section 104, the confidence-level correcting section 104 further corrects, according to a predetermined method, the motion vector vec' output by the downstream-processing correcting section 101, i.e., the motion vector vec', which is output as a result of the motion vector vec input by the histogram section 35 being corrected by the downstream-processing correcting section 101, and then outputs the resultant motion vector vec" via the LPF 37 externally (image processing section 11, image processing section 12, and switching section 15 in Fig. 1) from the motion detecting section 14.

The correction method employed by the confidence-level correcting section 104 is not limited to a particular method.

The motion vector vec of the pixel of interest 51 is used by the above-described image processing section 12 in this example. In short, the image processing section 12 corrects the pixel value of the pixel of interest 51 (so as to enhance the image) according to the direction and the magnitude of the motion vector vec of the pixel of interest 51. In this case, if a motion vector vec of the pixel of interest 51 with a low confidence level is used, such a problem that the pixel value of the pixel of interest 51 is overcorrected occurs.

In order to overcome this problem, for example, the confidence-level correcting section 104 can apply correction based on the right-hand side of Equation (10) shown below to the motion vector vec' obtained as a result of the motion vector vec of the pixel of interest 51 being corrected by the downstream-processing correcting section 101, and output externally from the motion detecting section 14 via the LPF 37 the correction result, i.e., the value vec" corresponding to the left-hand side of Equation (10), as a final (corrected) motion vector of the pixel of interest 51.

$$vec" = \alpha \times vec' \tag{10}$$

In Equation (10), $\alpha$ is a correction coefficient. This correction coefficient $\alpha$ can be set to any value in the range of 0 to 1.

The confidence-level evaluating section 103 can use conditions other than the above-described third condition and the fourth condition to evaluate the confidence level of the motion vector vec of the pixel of interest 51 supplied by the histogram section 35.

More specifically, if, for example, the search location pos2 corresponding to the smallest correlation value SAD(j) second to the minimal value "min1", i.e., the minimal value "min2", is the location i of the pixel of interest 51 as shown in Fig. 17, then the counterpart pixel (counterpart point) for the center pixel 71 in the window 72 is not the pixel at the search location pos1 corresponding to the minimal value "min1" but the pixel of interest 51 at the location i (search location pos2) in many cases.

For this reason, a fifth condition requiring that, for example, the search location pos2 corresponding to the minimal value "min2" be the location i of the pixel of interest 51 can be added, so that if the fifth condition is satisfied, the confidence-level evaluating section 103 in Fig. 13 evaluates that the confidence level of the motion vector vec of the pixel of interest 51 supplied by the histogram section 35 is low, thus switching the output destination of switching section 102 to the confidence-level correcting section 104. This causes the confidence-level correcting section 104 to further correct the motion vector vec' obtained as a result of the motion vector vec being corrected by the downstream-processing correcting section 101.

Although not shown, if the fifth condition is satisfied, the confidence-level evaluating section 103 informs the confidence-level correcting section 104 that the fifth condition is satisfied, so that the confidence-level correcting section 104 regards the counterpart pixel (counterpart point) for the center pixel 71 of the window 72 as the pixel of interest 51 at the location i (search location pos2), i.e., interprets that there is no motion at the location i of the pixel of interest 51, and changes the motion vector vec' of the pixel of interest 51 corrected by the downstream-processing correcting section 101 to "0". In other words, the confidence-level correcting section 104 sets the correction coefficient $\alpha$ in the above-described Equation (10) to 0 to correct the motion vector vec' of the pixel of interest 51 corrected by the downstream-processing correcting section 101. More specifically, if the fifth condition is satisfied, the confidence-level correcting section 104 corrects the motion vector vec' of the pixel of interest 51 corrected by the downstream-processing correcting section 101 into 0 vector.

In this case, however, the template matching section 34 (SAD-minimal-value evaluating section 63 in Fig. 4) needs to supply the confidence-level evaluating section 103 with this search location pos2, as well as the control signal "flag".

Alternatively, if the fifth condition is satisfied, the SAD-minimal-value evaluating section 63 may always output "1" as the control signal "flag".

To explain possible variations of the motion-vector correcting sections 36 in Fig. 2, the example structure of the motion-vector correcting section 36A in Fig. 13 has been described.

The motion-vector correcting section 36 in Fig. 2 may be realized in the form of, for example, the motion-vector correcting section 36B shown in Fig. 18 or the motion-vector correcting section 36C shown in Fig. 19.

The motion-vector correcting section 36B in Fig. 18 includes the downstream-processing correcting section 101. This downstream-processing correcting section 101 has basically the same function and structure as the function and structure of the counterpart in the motion-vector correcting section 36A in Fig. 13. The motion-vector correcting section 36B in Fig. 18 does not apply correction processing as done by the confidence-level correcting section 104 in Fig. 13 to the motion vector vec input by the histogram section 35; it just carries out the correction processing by the downstream-processing correcting section 101.

On the other hand, the motion-vector correcting section 36C in Fig. 19 has the same structure as that of the motion-vector correcting section 36A in Fig. 13, except that the motion-vector correcting section 36C does not include the downstream-processing correcting section 101 included in the motion-vector correcting section 36A. Therefore, the motion-vector correcting section 36C in Fig. 19 does not apply correction processing as done by the downstream-processing correcting section 101 in Fig. 13 to the motion vector vec input by the histogram section 35; it just carries out the correction processing by the confidence-level correcting section 104 (only if the confidence-level evaluating section 103 determines that the confidence level of the motion vector vec is low).

The example structure of the motion detecting section 14 in Fig. 2 has been described with reference to Figs. 2 to 19. The operation of the motion detecting section 14 will now be outlined.

The motion detecting section 14 according to this embodiment sets a predetermined pixel from among the pixels constituting the target display frame as a pixel of interest. The motion detecting section 14 generates a motion vector at the pixel of interest, corrects the motion vector based on the confidence level of the motion vector and the characteristics of downstream processing, and outputs the motion vector externally (the image processing section 11, the image processing section 12, and the switching section 15 in Fig. 1).

In more detail, the template matching section 34 compares the target display frame (image data) with the previous frame (image data) to generate the candidate motion vector "pvec" at the pixel of interest and supplies it to the histogram section 35.

In other words, the template matching section 34 detects a first pixel on the target display frame (the first pixel is, for example, a pixel from among the pixels in the search range i-6 to i+6 in Fig. 5) as the counterpart pixel for a second pixel arranged at the location on the previous frame corresponding to the location of the pixel of interest (the second pixel is, for example, the pixel 71 at the location i, if the pixel 51 functioning as the pixel of interest is set as shown in Fig. 5). The template matching section 34 then generates, as a candidate motion vector "pvec" at the pixel of interest, a vector originating from the pixel of interest and terminating at the first pixel (the candidate motion vector "pvec" is, for example, "+6" if the pixel 51 is set as the pixel of interest and the center pixel of the comparison area 73-(+6), i.e., the pixel at the location i+6, is detected as the first pixel, as shown in Fig. 5) and supplies the candidate motion vector to the histogram section 35.

Furthermore, the template matching section 34 supplies first information indicating a command for correcting the motion vector (i.e., the control signal "flag" of "1" in this example) to the motion-vector correcting section 36, if it is determined that the target display frame contains two or more candidate counterpart pixels (e.g., if the pixel at the search location i-1 and the pixel at the search location i+5 are candidate counterpart pixels as shown in Fig. 9, more specifically, if, for example, the first condition requiring that all of Inequality (5) to Inequality (7) shown above be established is satisfied) or if it is determined that the confidence level of the second pixel being the counterpart pixel is low (e.g., if the second condition requiring that Inequality (8) shown above be established is satisfied).

The histogram section 35 determine as the motion vector vec at the pixel of interest the candidate motion vector with the highest frequency (e.g., "+4" having the highest frequency in the histogram shown in Fig. 12) from among the candidate motion vectors "pvec" at the pixel of interest and its neighboring pixels generated by the template matching section 34 (the candidate motion vectors are, for example, values at the pixels (segments) in the area 95 in Fig. 11), and outputs the motion vector vec to the motion-vector correcting section 36.

The luminance-gradient detecting section 33 calculates the degree of change in luminance around the pixel of interest (e.g., above-described luminance gradient, more specifically, the value "slope" of Equation (2) shown above) and supplies it to the motion-vector correcting section 36.

The motion-vector correcting section 36 can correct the motion vector vec supplied by the histogram section 35 based on the characteristics of the processing by a downstream section (e.g., the correcting section 22 in Fig. 1) and output the obtained motion vector vec' externally (image processing section 11, image processing section 12, and switching section 15 in Fig. 1) as-is or after further applying the following correction processing.

More specifically, the motion-vector correcting section 36 can evaluate the confidence level of the motion vector vec supplied by the histogram section 35 based on the processing result (luminance gradient "slope" in this example) from the luminance-gradient detecting section 33 and the processing result (control signal "flag" in this example) from the template matching section 34. Thereafter, if the motion-vector correcting section 36 evaluates that the confidence-level of the motion vector vec is low, more specifically, if, for example, at least one of the third condition requiring that Inequality (9) shown above be established and the fourth condition requiring that the control signal "flag" supplied by the template matching section 34 in Fig. 2 be "1" is satisfied, then the motion-vector correcting section 36 can further correct the corrected motion vector vec' according to the downstream processing and output the obtained motion vector vec" externally (image processing section 11, image processing section 12, and switching section 15 in Fig. 1).

Alternatively, the motion-vector correcting section 36 can evaluate the confidence level of the motion vector vec supplied by the histogram section 35 based on the processing result from the luminance-gradient detecting section 33 and the processing result from the template matching section 34 without performing correction processing according to the downstream processing, and if the motion-vector correcting section 36 evaluates that the confidence level of the motion vector vec is low, the motion-vector correcting section 36 can correct the motion vector vec supplied by the histogram section 35 and output it externally (image processing section 11, image processing section 12, and switching section 15 in Fig. 1).

In this manner, the motion detecting section 14 according to this embodiment can output the motion vector vec (strictly speaking, the corrected motion vector vec' or motion vector vec") of a pixel matching those of neighboring pixels. As a result, for example, the image processing section 12 in Fig. 1 can accurately prevent motion blurring (especially, motion blurring due to follow-up seeing) from occurring in the hold-type display apparatus 2 while also preventing mismatching the neighbors.

Image processing by the image processing apparatus 1 (shown in Fig. 1) according to this embodiment will now be described with reference to the flowchart in Fig. 20.

First in step S1, the image processing apparatus 1 inputs the image data of the target display frame. In more detail, the image data of the target display frame is input to the image processing section 11, the image processing section 12, the reference-image storing section 13, and the motion detecting section 14.

In step S2, the image processing apparatus 1 (the image processing section 11, the image processing section 12, and the motion detecting section 14, etc.) sets a pixel of interest from among the pixels constituting the target display frame.

In step S3, the motion detecting section 14 compares the image data of the target display frame with the image data of the reference image (previous frame) stored in the reference-image storing section 13 to calculate the motion vector vec of the pixel of interest, corrects the motion vector vec as required, and supplies it to the image processing section 11, the image processing section 12, and the switching section 15.

Hereinafter, the above-described processing (processing in step S3) by the motion detecting section 14 is referred to as "motion-vector calculation processing". Details of the "motion-vector calculation processing" will be described later with reference to the flowchart in Fig. 21.

In step S4, the image processing apparatus 1 (the image processing section 11, the image processing section 12, the switching section 15, etc.) determines whether the magnitude of the motion vector vec of the pixel of interest is equal to the threshold or more.

Strictly speaking, the processing in steps S4 to S7 uses the corrected motion vector vec' or motion vector vec" of the pixel of interest output as a result of the "motion-vector calculation processing", which is the processing in step S3 by the motion detecting section 14. Since the motion vector vec' and the motion vector vec" need not be discriminated from each other for the description of the processing in steps S4 to S7, the motion vectors v' and v " are referred to just as the motion vector vec.

If it is determined in step S4 that the magnitude of the motion vector vec is below the threshold (the magnitude of the motion vector vec is not equal to or higher than the threshold), i.e., if the pixel of interest is not moving, then the switching section 15 switches its input to the image processing section 11. As a result, in step S5, the image processing section 11 applies predetermined image processing to the pixel of interest to correct the pixel value of the pixel of interest and supplies the corrected pixel value to the display control section 16 via the switching section 15.

In contrast, if it is determined in step S4 that the magnitude of the motion vector vec is equal to the threshold or more, i.e., if the pixel of interest is moving, the switching section 15 switches its input to the image processing section 12 (correcting section 22).

At this time, in step S6, the step-edge detecting section 21 calculates the difference value between the pixel value of the pixel of interest and the pixel value of the pixel neighboring to the pixel of interest in a predetermined direction (the spatial direction X or the opposite direction, whichever is determined according to the direction (positive or negative) of the motion vector vec supplied by the motion detecting section 24 in this example). The step-edge detecting section 21 then supplies the calculated difference value and the pixel value of the pixel of interest to the correcting section 22.

In step S7, the correcting section 22 corrects the pixel value of the pixel of interest supplied by the step-edge detecting section 21 based on the motion vector of the pixel of interest supplied by the motion detecting section 14 and the difference value supplied by the step-edge detecting section 21, and supplies the corrected pixel value to the display control section 16 via the switching section 15.

In step S8, the display control section 16 outputs to the hold-type display apparatus 2 the pixel value of the pixel of interest supplied via the switching section 15 by the image processing section 11 or the image processing section 12 (by converting the pixel value into a signal corresponding to the hold-type display apparatus 2, as required). In other words, the display control section 16 outputs to the hold-type display apparatus 2 the pixel value of the pixel of interest as the target level for the display element corresponding to the pixel of interest from among the display elements of the hold-type display apparatus 2.

In step S9, the image processing apparatus 1 determines whether the pixel values of all pixels have been output.

If it is determined in step S9 that the pixel values of some pixels have not been output, the flow returns to step S2 to repeat the subsequent processing. More specifically, one of unprocessed pixels from among the pixels constituting the target display frame is set as a pixel of interest, and the pixel value of the new pixel of interest is corrected (including 0 correction) and output to the hold-type display apparatus 2.

The above-described processing is repeated until the pixel values of all pixels constituting the target display frame are passed to the hold-type display apparatus 2. If it is determined in step S9 that the pixel values of all pixels have been output, the flow proceeds to step S10.

At this time, the hold-type display apparatus 2 applies voltages of the levels corresponding to the supplied pixel values (target levels) to the display elements (e.g., liquid crystal) constituting the screen, and maintains the levels of voltage until the display of the subsequent frame is specified (until the pixel values of all pixels constituting the subsequent frame are supplied). In short, each of the display elements displays and holds the corresponding pixel.

In step S10, the image processing apparatus 1 determines whether all frames constituting the moving image have been processed.

If it is determined in step S10 that some frames have not been processed, the flow returns to step S1, where image data of the subsequent frame is input as the image data of the target display frame and the same processing is repeated.

Finally, if the pixel values of all pixels constituting the final frame from among the frames constituting the moving image are corrected (including 0 correction) and output to the hold-type display apparatus 2, it is determined in step S10 that all frames have been processed, and the image processing by the image processing apparatus 1 ends.

Although, in the example of Fig. 20, the image processing apparatus 1 individually outputs the pixel values (corrected pixel values) of the pixels constituting the target display frame to the hold-type display apparatus 2, the image processing apparatus 1 may output the corrected pixel values of all pixels constituting the target display frame all at a time (as an image signal of the target display frame).

The "motion-vector calculation processing" (processing in step S3 of Fig. 20) by the motion detecting section 14 in Fig. 2 will now be described with reference to the flowchart in Fig. 21.

First in step S21, the luminance-gradient detecting section 33 detects the luminance gradient "slope" around the pixel of interest and supplies it to the motion-vector correcting section 36.

In step S22, the template matching section 34 calculates the candidate motion vector "pvec" at each of pixels including the pixel of interest (e.g., the pixels constituting the area 95 in Fig. 11) and supplies them to the histogram section 35.

Furthermore, in step S23 the template matching section 34 generates the control signal "flag" indicating whether the motion vector vec of the pixel of interest should be corrected, and supplies it to the motion-vector correcting section 36.

In step S24, the histogram section 35 generates a histogram of the candidate motion vectors "pvec" of the pixels including the pixel of interest (e.g., the histogram in Fig. 12), determines the candidate motion vector "pvec" with the highest frequency as the motion vector vec of the pixel of interest, and supplies it to the motion-vector correcting section 36.

In step S25, the downstream-processing correcting section 101 of the motion-vector correcting section 36A in Fig. 13 corrects the motion vector vec of the pixel of interest by a first correction method, and supplies the resultant motion vector vec' to the switching section 102.

If the motion-vector correcting section 36 in Fig. 2 is realized in the form of the motion-vector correcting section 36C in Fig. 19, the processing in step S25 is omitted.

On the other hand, if the motion-vector correcting section 36 in Fig. 2 is realized in the form of the motion-vector correcting section 36B in Fig. 18, the processing in step S25 is carried out and the processing in steps S26 to S28, to be described later, is omitted.

As described above, the operation of the "motion-vector calculation processing" slightly differs depending on the structure of the motion-vector correcting section 36 in Fig. 2. In other words, Fig. 21 is a flowchart illustrating one example of the "motion-vector calculation processing" when the motion-vector correcting section 36 in Fig. 2 is realized in the form of the motion-vector correcting section 36A in Fig. 13.

When the above-described processing in step S25 is completed, the flow proceeds to step S26.

In step S26, the confidence-level evaluating section 103 in Fig. 13 evaluates the confidence level of the motion vector vec based on the control signal "flag" generated by the template matching section 34 through the processing in step S23 and the luminance gradient "slope" detected by the luminance-gradient detecting section 33 through the processing in step S21.

In step S27, the confidence-level evaluating section 103 determines whether the confidence level of the motion vector vec is low based on the result of the processing in the step S26.

If the confidence-level evaluating section 103 determines in step S27 that the confidence level of the motion vector vec is high (not low), it switches the output destination of the switching section 102 to the external LPF 37, and the flow proceeds to step S29.

In step S29, the switching section 102 outputs the motion vector vec' corrected by the downstream-processing correcting section 101 by the first correction method through the processing in step S25 externally (image processing apparatus 11, image processing apparatus 12, and switching section 15 in Fig. 1) from the motion detecting section 14 via the LPF 37.

In contrast, if the confidence-level evaluating section 103 determines in step S27 that the confidence level of the motion vector vec is low, it switches the output destination of the switching section 102 to the confidence-level correcting section 104, and the flow proceeds to step S28.

In this case, the motion vector vec' corrected by the downstream-processing correcting section 101 by the first correction method through the processing in step S25 is supplied to the confidence-level correcting section 104. In step S28, the confidence-level correcting section 104 further corrects the motion vector vec' of the pixel of interest (corrected by the downstream-processing correcting section 101) by a second correction method and in step S29 outputs the corrected motion vector vec" externally from the motion detecting section 14 via the LPF 37.

If the motion vector vec' or motion vector vec" of the pixel of interest corrected through the processing in step S29 is output in this manner, the "motion-vector calculation processing" ends.

The image processing apparatus embodying the present invention is not limited to the structure shown in Fig. 1, and can be realized according to various embodiments.

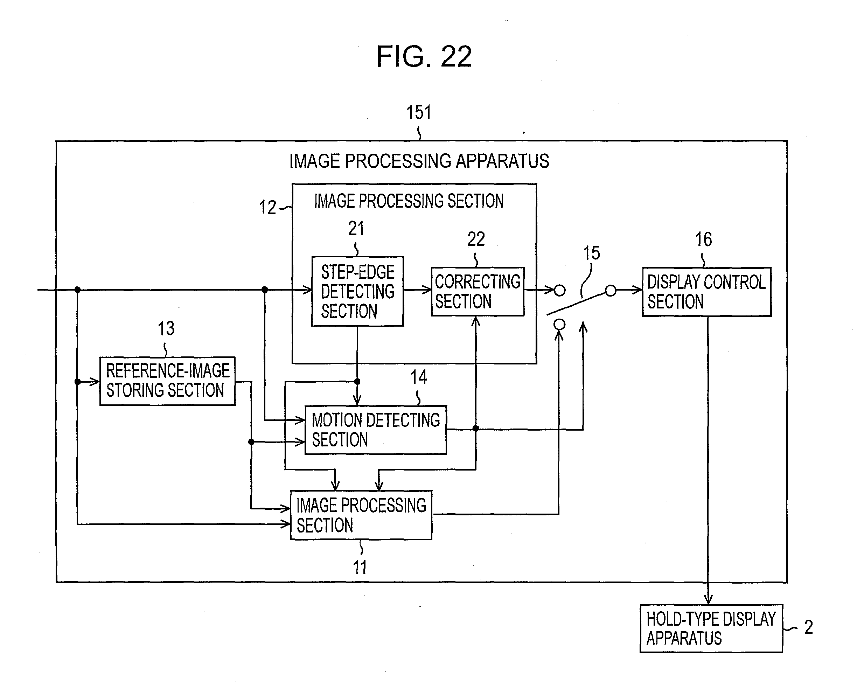

The image processing apparatus embodying the present invention can be realized in the form of the structure shown in, for example, Fig. 22. Fig. 22 illustrates an example structure of an image processing apparatus according to another embodiment. The same components in Fig. 22 as those in Fig. 1 are denoted with the same reference numerals.

An image processing apparatus 151 according to this embodiment has basically the same structure and function as the structure and function of the image processing apparatus 1 in Fig. 1. The image processing apparatus 151 includes sections from the image processing section 11 to the display control section 16, which are basically the same as the those in Fig. 1.

In the image processing apparatus 1 in Fig. 1, the detection result (motion vector vec) from the motion detecting section 14 is supplied to the step-edge detecting section 21. In the image processing apparatus 151 in Fig. 22, however, the detection result from the motion detecting section 14 is not supplied to the step-edge detecting section 21, and the detection result from the step-edge detecting section 21 is supplied to the motion detecting section 14 and the image processing section 11.

Because of the above-described structure, the image processing apparatus 151 operates as described below.

In the image processing apparatus 151, the step-edge detecting section 21 detects the pixels corresponding to a step edge from among the pixels constituting a predetermined frame, and supplies the detection result to the motion detecting section 14 and the image processing section 11, as well as the correcting section 22.

As a result, the motion detecting section 14 can apply its processing only to the pixels (pixels corresponding to the step edge) detected by the step-edge detecting section 21. In other words, the motion detecting section 14 detects whether the step edge detected by the step-edge detecting section 21 is moving.

Furthermore, from among the pixels (pixels corresponding to the step edge) detected by the step-edge detecting section 21, the image processing section 11 does not apply its processing to pixels found moving by the motion detecting section. More specifically, the image processing section 11 does not apply its processing to pixels corresponding to a moving step edge, whereas it applies its processing to pixels other than those corresponding to a moving step edge.

As described above, in the image processing apparatus 151 in Fig. 22, each pixel is subjected to image processing either by the image processing section 11 or the image processing section 12. In other words, one frame is subjected to only one image processing operation. Furthermore, processing by the motion detecting section 14 is applied only to pixels corresponding to a step edge. For this reason, the entire amount of processing by the image processing apparatus 151 can be reduced.

The above-described sequence of processing can be carried out not only with hardware but also with software.

If software is used to carry out the above-described sequence of processing, the image processing apparatus 1 in Fig. 1 and the image processing apparatus 151 in Fig. 22 can be realized by, for example, a personal computer as shown in Fig. 23.

In Fig. 23, a CPU (Central Processing Unit) 201 carries out various processing according to programs stored in a ROM (Read Only Memory) 202 or programs loaded from a storage unit 208 to a RAM (Random Access Memory) 203. The RAM 203 also stores data required by the CPU 201 to carry out various processing.

The CPU 201, the ROM 202, and the RAM 203 are interconnected via a bus 204. An input/output interface 205 is also connected to the bus 204.

An input unit 206 including, for example, a keyboard and a mouse; an output unit 207 including, for example, an LCD; the storage unit 208 including, for example, a hard disk; and a communicating unit 209 including, for example, a modem and a terminal adapter are connected to the input/output interface 205. The communicating unit 209 carries out communication with other information processing apparatuses (not shown) via a network including the Internet.

In this case, the output unit 207 itself may be a hold-type display apparatus or an external hold-type display apparatus 2 (in Fig. 1) may be connected to a connection portion (not shown) connected to the input/output interface 205 as required.

A drive 210 is connected to the input/output interface 205, as required. A removable medium 211 including, for example, a magnetic disk, an optical disk, a magneto-optical disk, or a semiconductor memory is mounted to the drive 210 so that computer programs are read from the drive 210 and stored in the storage unit 208.

If the sequence of processing is to be implemented using software, a program constituting the software is installed from a network or recording medium to a computer built into dedicated hardware or to, for example, a general-purpose personal computer that requires programs to be installed to carry out the corresponding functions.

As shown in Fig. 23, the recording medium containing the program may be a removable medium 211, such as a package medium including a magnetic disk (including a flexible disk); an optical disk (including a compact disc-read only memory, i.e., CD-ROM and a digital versatile disk, i.e., DVD); a magneto-optical disk (including a mini-disc, i.e., MD); or a semiconductor memory, if such a program is supplied separately from a user's computer. The recording medium may be the ROM 202 or a hard disk in the storage unit 208 if the program on the recording medium is supplied preinstalled on the user's computer.

In embodiments of the present invention, the steps of programs recorded on the recording medium may or may not be followed time-sequentially in order of described steps. Furthermore, the steps may be followed in parallel or independently from one another.

Although a predetermined one of the pixels constituting a frame corresponds to one of the display elements (liquid crystal for LCD apparatuses) constituting the screen of the hold-type display apparatus 2 in the above-described embodiments, one pixel may corresponds to a plurality of display elements. In other words, a plurality of display elements may display one pixel.

Furthermore, although the image processing apparatus generates a motion vector parallel to the spatial direction X in the above-described embodiments, the image processing apparatus can generate a motion vector parallel to the spatial direction Y or a motion vector in any direction on the two-dimensional plane parallel to the spatial direction X and the spatial direction Y through basically the same processing as the above-described series of processing.

According to embodiments, histogram section determines as a motion vector at a pixel of interest the candidate motion vector with highest frequency from among a candidate motion vector at the pixel of interest and candidate motion vectors at pixels neighboring the pixel of interest supplied by a template matching section, and supplies it to a motion-vector correcting section. The motion-vector correction section evaluates the confidence level of the motion vector supplied by the histogram section based on the luminance gradient around the pixel of interest detected by a luminance-gradient detecting section and a control signal indicating whether correction should be carried out supplied by the template matching section. If it is determined that the confidence level of the motion vector is low, the motion vector is corrected.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

**Claims**

1. An image processing apparatus comprising:

   candidate generating means for setting as a pixel of interest a predetermined pixel from among pixels constituting a first access unit and comparing the first access unit with a second access unit preceding the first access unit to generate a candidate motion vector at the pixel of interest;
   motion-vector determining means for determining as a motion vector at the pixel of interest a candidate motion vector with highest frequency from among the candidate motion vector at the pixel of interest and candidate motion vectors at pixels neighboring the pixel of interest generated by the candidate generating means;
   luminance-change calculating means for calculating a degree of change in luminance around the pixel of interest; and
   correction means for evaluating a confidence level of the motion vector determined by the motion-vector determining means based on results of processing by the luminance-change calculating means and the candidate generating means, and correcting the motion vector if it is determined that the confidence level is low.

2. The image processing apparatus according to claim 1, wherein, if the degree of change in luminance calculated by the luminance-change calculating means is below a threshold, the correction means determines that the confidence level of the motion vector is low and corrects the motion vector.

3. The image processing apparatus according to claim 1, wherein the candidate generating means detects a first pixel on the first access unit as a counterpart pixel for a second pixel on the second access unit, the second pixel being arranged at a location corresponding to the location of the pixel of interest, and generates a vector originating from the pixel of interest and terminating at the first pixel as the candidate motion vector at the pixel of interest.

4. The image processing apparatus according to claim 3, wherein, if it is determined that the first access unit includes a plurality of candidates for the counterpart pixel or that the confidence level of the first pixel being the counterpart pixel is low, the candidate generating means provides the correction means with first information indicating a command for correcting the motion vector; and
   if the correction means receives the first information from the candidate generating means, the correction means determines that the confidence level of the motion vector is low and corrects the motion vector.

5. The image processing apparatus according to claim 4, wherein, if the pixel of interest is included in the plurality of candidates for the counterpart pixel, the candidate generating means provides the correction means with second information indicating that the pixel of interest is included in the plurality of candidates for the counterpart pixel; and
   if the correction means receives the second information from the candidate generating means, the correction means determines that the confidence level of the motion vector is low and corrects the motion vector to a 0 vector.

6. An image processing method comprising:

   a candidate generating step of setting as a pixel of interest a predetermined pixel from among pixels constituting a first access unit and comparing the first access unit with a second access unit preceding the first access unit to generate a candidate motion vector at the pixel of interest;
   a motion-vector determining step of determining as a motion vector at the pixel of interest a candidate motion vector with highest frequency from among the candidate motion vector at the pixel of interest and candidate motion vectors at pixels neighboring the pixel of interest generated in the candidate generating step;

a luminance-change calculating step of calculating a degree of change in luminance around the pixel of interest; and

a correction step of evaluating a confidence level of the motion vector determined in the motion-vector determining step based on results of processing in the luminance-change calculating step and the candidate generating step, and correcting the motion vector if it is determined that the confidence level is low.

7. A computer-executable program for setting as a pixel of interest a predetermined pixel from among pixels constituting a first access unit and applying image processing to the pixel of interest, the program comprising:

a candidate generating step of comparing the first access unit with a second access unit preceding the first access unit to generate a candidate motion vector at the pixel of interest;

a motion-vector determining step of determining as a motion vector at the pixel of interest a candidate motion vector with highest frequency from among the candidate motion vector at the pixel of interest and candidate motion vectors at pixels neighboring the pixel of interest generated in the candidate generating step;

a luminance-change calculating step of calculating a degree of change in luminance around the pixel of interest; and

a correction step of evaluating a confidence level of the motion vector determined in the motion-vector determining step based on results of processing in the luminance-change calculating step and the candidate generating step, and correcting the motion vector if it is determined that the confidence level is low.

8. An image processing apparatus comprising:

candidate generating means for setting as a pixel of interest a predetermined pixel from among pixels constituting a first access unit and comparing the first access unit with a second access unit preceding the first access unit to generate a candidate motion vector at the pixel of interest;

motion-vector determining means for determining as a motion vector at the pixel of interest a candidate motion vector with highest frequency from among the candidate motion vector at the pixel of interest and candidate motion vectors at pixels neighboring the pixel of interest generated by the candidate generating means;

correction means for correcting the motion vector determined by the motion-vector determining means; and

processing executing means for carrying out predetermined processing using the motion vector corrected by the correction means,

wherein the correction means corrects the motion vector by a first method based on a characteristic of the predetermined processing by the processing executing means.

9. The image processing apparatus according to claim 8, further comprising:

luminance-change calculating means for calculating a degree of change in luminance around the pixel of interest,

wherein the correction means evaluates a confidence level of the motion vector determined by the motion-vector determining means based on results of processing by the luminance-change calculating means and the candidate generating means and, if it is determined that the confidence level of the motion vector is low, further corrects the motion vector corrected by the first method by a second method.

10. An image processing method by an information processing apparatus, the method comprising:

a candidate generating step of setting as a pixel of interest a predetermined pixel from among pixels constituting a first access unit and comparing the first access unit with a second access unit preceding the first access unit to generate a candidate motion vector at the pixel of interest;

a motion-vector determining step of determining as a motion vector at the pixel of interest a candidate motion vector with highest frequency from among the candidate motion vector at the pixel of interest and candidate motion vectors at pixels neighboring the pixel of interest generated in the candidate generating step;

a correction step of correcting the motion vector determined in the motion-vector determining step; and

a processing control step of controlling the information processing apparatus to carry out predetermined processing using the motion vector corrected in the correction step,

wherein, in the correction step, the motion vector is corrected by a correction method based on a characteristic of the predetermined processing by the image processing apparatus in the processing control step.

**11.** A computer-executable program for controlling a processing executing apparatus for applying predetermined processing to a predetermined one of a plurality of access units constituting a moving image, wherein the predetermined processing uses a motion vector at each of pixels on the predetermined access unit, the program comprising:

a candidate generating step of setting as a pixel of interest a predetermined pixel from among pixels constituting a first access unit and comparing the first access unit with a second access unit preceding the first access unit to generate a candidate motion vector at the pixel of interest;

a motion-vector determining step of determining as a motion vector at the pixel of interest a candidate motion vector with highest frequency from among the candidate motion vector at the pixel of interest and candidate motion vectors at pixels neighboring the pixel of interest generated in the candidate generating step;

a correction step of correcting the motion vector determined in the motion-vector determining step; and

a processing control step of controlling the processing executing apparatus to carry out the predetermined processing using the motion vector corrected in the correction step,

wherein, in the correction step, the motion vector is corrected by a correction method based on a characteristic of the predetermined processing by the processing executing apparatus in the processing control step.

**12.** An image processing apparatus comprising:

a candidate generating unit for setting as a pixel of interest a predetermined pixel from among pixels constituting a first access unit and comparing the first access unit with a second access unit preceding the first access unit to generate a candidate motion vector at the pixel of interest;

a motion-vector determining unit for determining as a motion vector at the pixel of interest a candidate motion vector with highest frequency from among the candidate motion vector at the pixel of interest and candidate motion vectors at pixels neighboring the pixel of interest generated by the candidate generating unit;

a luminance-change calculating unit for calculating a degree of change in luminance around the pixel of interest; and

a correction unit for evaluating a confidence level of the motion vector determined by the motion-vector determining unit based on results of processing by the luminance-change calculating unit and the candidate generating unit, and correcting the motion vector if it is determined that the confidence level is low.

# FIG. 1

IMAGE PROCESSING APPARATUS 1

IMAGE PROCESSING SECTION 12

21
STEP-EDGE DETECTING SECTION

22
CORRECTING SECTION

15

16
DISPLAY CONTROL SECTION

13
REFERENCE -IMAGE STORING SECTION

14
MOTION DETECTING SECTION

11
IMAGE PROCESSING SECTION

2
HOLD-TYPE DISPLAY APPARATUS

EP 1 589 763 A2

28

## FIG. 2

MOTION DETECTING SECTION (14)

INPUT IMAGE → LPF (31) → LUMINANCE-GRADIENT DETECTING SECTION (33) → MOTION-VECTOR CORRECTING SECTION (36) → LPF (37) →

REFERENCE-IMAGE STORING SECTION (13) → LPF (32) → TEMPLATE MATCHING SECTION (34) → HISTOGRAM SECTION (35) → MOTION-VECTOR CORRECTING SECTION (36)

EP 1 589 763 A2

# FIG. 3

$$Y_{i-1} \quad | \quad Y_i \quad | \quad Y_{i+1}$$

52      51      53

i − 1      i      i + 1

SPATIAL DIRECTION X

# FIG. 4

**TEMPLATE MATCHING SECTION** (34)

- 31 — LPF
- 32 — LPF
- 61 — SAD CALCULATING SECTION
- 62 — SAD-MINIMAL-VALUE DETECTING SECTION
- 63 — SAD-MINIMAL-VALUE EVALUATING SECTION
- 35 — HISTOGRAM SECTION
- 36 — MOTION-VECTOR CORRECTING SECTION

# FIG. 5

EP 1 589 763 A2

$i-6$                    $i$                    $i+6$ SPATIAL DIRECTION X

73-(-6)                    SEARCH RANGE                    73-(+6)

51

TARGET
DISPLAY FRAME $\boxed{C_1^{i-6}}\boxed{C_2^{i-6}}\boxed{C_3^{i-6}}\boxed{C_4^{i-6}}\boxed{C_5^{i-6}}$                    $\boxed{C_1^{i+6}}\boxed{C_2^{i+6}}\boxed{C_3^{i+6}}\boxed{C_4^{i+6}}\boxed{C_5^{i+6}}$

PREVIOUS
FRAME                    $\boxed{P_1^i}\boxed{P_2^i}\boxed{P_3^i}\boxed{P_4^i}\boxed{P_5^i}$

71

72

# FIG. 6

LUMINANCE
(PIXEL VALUE)

PIXEL LOCATION

# FIG. 7

SEARCH LOCATION

# FIG. 8

# FIG. 9

# FIG. 10

EP 1 589 763 A2

# FIG. 11

95

| 5 | 5 | 4 | 3 | 3 | 4 | 4 | 4 | 4 | 2 | −2 | 2 | 4 | 4 | 3 | 3 | 3 |
|---|---|---|---|---|---|---|---|---|---|----|---|---|---|---|---|---|

51

SPATIAL DIRECTION X

# FIG. 12

FREQUENCY

CANDIDATE MOTION VECTOR

# FIG. 13

MOTION-VECTOR CORRECTING SECTION 36A

FROM 35 → DOWNSTREAM-PROCESSING CORRECTING SECTION 101

102 → CONFIDENCE-LEVEL CORRECTING SECTION 104 → TO 37

CONFIDENCE-LEVEL EVALUATING SECTION 103

FROM 33    FROM 34

EP 1 589 763 A2

# FIG. 14

AMOUNT OF CORRECTION BY
CORRECTING SECTION 22

−6

6

MOTION VECTOR

# FIG. 15

CORRECTED MOTION
VECTOR vec'

MOTION VECTOR vec
BEFORE CORRECTION

# FIG. 16

# FIG. 17

SEARCH LOCATION

# FIG. 18

36B

MOTION-VECTOR
CORRECTING SECTION

FROM 35 ⟶ | DOWNSTREAM-PROCESSING CORRECTING SECTION | ⟶ TO 37

101

## FIG. 19

36C

MOTION-VECTOR CORRECTING SECTION

102

FROM 35

CONFIDENCE-LEVEL
CORRECTING SECTION

TO 37

104

CONFIDENCE-LEVEL
EVALUATING SECTION

103

FROM 33    FROM 34

EP 1 589 763 A2

# FIG. 20

START OF IMAGE PROCESSING

INPUT IMAGE DATA OF FRAME TO BE DISPLAYED — S1

SET PIXEL OF INTEREST — S2

MOTION VECTOR CALCULATION — S3

MAGNITUDE OF MOTIONVECTOR ≥ THRESHOLD? — S4

NO → APPLY PREDETERMINED IMAGE PROCESSING — S5

YES

CALCULATE DIFFERENCE BETWEEN PIXEL VALUE OF PIXEL OF INTEREST AND PIXEL VALUE OF NEIGHBORING PIXEL — S6

CORRECT PIXEL VALUE OF PIXEL OF INTEREST BASED ON MOTION VECTOR AND DIFFERENCE — S7

OUTPUT PIXEL VALUE OF PIXEL OF INTEREST — S8

PIXEL VALUES OF ALL PIXELS OUTPUT? — S9

NO

YES

ALL FRAMES PROCESSED? — S10

NO

YES

END

47

# FIG. 21

```
( START OF MOTION VECTOR CALCULATION )
                    |
                    v
┌─────────────────────────────────┐  S21
│  DETECT LUMINANCE GRADIENT      │
│  AROUND PIXEL OF INTEREST       │
└─────────────────────────────────┘
                    |
                    v
┌─────────────────────────────────────┐  S22
│  CALCULATE CANDIDATE MOTION VECTOR OF │
│  EACH OF PIXELS INCLUDING PIXEL OF INTEREST │
└─────────────────────────────────────┘
                    |
                    v
┌─────────────────────────────────────┐  S23
│  GENERATE CONTROL SIGNAL (FLAG)       │
│  INDICATING WHETHER MOTION VECTOR OF  │
│  PIXEL OF INTEREST SHOULD BE CORRECTED │
└─────────────────────────────────────┘
                    |
                    v
┌─────────────────────────────────────┐  S24
│  GENERATE HISTOGRAM OF CANDIDATE MOTION │
│  VECTORS OF PIXELS INCLUDING PIXEL OF   │
│  INTEREST AND SELECT CANDIDATE MOTION   │
│  VECTOR WITH HIGHEST FREQUENCY AS       │
│  MOTION VECTOR OF PIXEL OF INTEREST     │
└─────────────────────────────────────┘
                    |
                    v
┌─────────────────────────────────────┐  S25
│  CORRECT MOTION VECTOR OF PIXEL OF    │
│  INTEREST BY FIRST CORRECTION METHOD  │
└─────────────────────────────────────┘
                    |
                    v
┌─────────────────────────────────────┐  S26
│  EVALUATE CONFIDENCE LEVEL OF MOTION  │
│  VECTOR BASED ON CONTROL SIGNAL       │
│  (FLAG) AND LUMINANCE GRADIENT        │
└─────────────────────────────────────┘
                    |
                    v
             < CONFIDENCE          > S27   NO
             < LEVEL OF MOTION     >─────────┐
             < VECTOR IS LOW?      >         │
                    |                        │
                    | YES                    │
                    v                        │
┌─────────────────────────────────────┐  S28 │
│  CORRECT MOTION VECTOR OF PIXEL OF   │      │
│  INTEREST BY SECOND CORRECTION METHOD │      │
└─────────────────────────────────────┘      │
                    |<──────────────────────┘
                    v
┌─────────────────────────────────────┐  S29
│ OUTPUT MOTION VECTOR OF PIXEL OF INTEREST │
└─────────────────────────────────────┘
                    |
                    v
               ( RETURN )
```

# FIG. 22

IMAGE PROCESSING APPARATUS — 151

IMAGE PROCESSING SECTION — 12

21 STEP-EDGE DETECTING SECTION

22 CORRECTING SECTION

15

16 DISPLAY CONTROL SECTION

13 REFERENCE-IMAGE STORING SECTION

14 MOTION DETECTING SECTION

11 IMAGE PROCESSING SECTION

HOLD-TYPE DISPLAY APPARATUS — 2

EP 1 589 763 A2

# FIG. 23